# EUROPÄISCHE PATENTSCHRIFT

(11) **EP 2 038 315 B1**
(45) Veröffentlichungstag und Bekanntmachung des Hinweises auf die Patenterteilung: **23.10.2013**
(21) Anmeldenummer: 07729032.8
(22) Anmeldetag: 11.05.2007
(51) Int. Cl.: C08F 210/16, C08F 210/06

(54) **VERFAHREN ZUR HERSTELLUNG VON POLYMEREN AUS 3-METHYLBUT-1-EN**
PROCESS FOR PREPARING POLYMERS FROM 3-METHYLBUT-1-ENE
PROCÉDÉ DE FABRICATION DE POLYMÈRES À PARTIR DE 3-MÉTHYLBUT-1-ÈNE

(30) Priorität: 11.07.2006 DE 102006031960
(43) Veröffentlichungstag der Anmeldung: 25.03.2009
(73) Patentinhaber: Evonik Degussa GmbH, 45128 Essen (DE)
(72) Erfinder: GRASS, Michael, 45721 Haltern Am See (DE); NIERLICH, Franz, 45768 Marl (DE); KAMINSKY, Walter, 25421 Pinneberg (DE); DERLIN, Stefanie, 21465 Reinbeck (DE); WIESE, Klaus-Diether, 45721 Haltern Am See (DE); ORTMANN, Dagmara, 5610 Wohlen (CH)
(86) Internationale Anmeldenummer: PCT/EP2007/054580
(87) Internationale Veröffentlichungsnummer: WO 2008/006636

(56) Entgegenhaltungen:
- EP-A2- 1 197 501
- WO-A-2005/080302
- DE-A1- 3 146 568
- JP-A- 8 073 675
- US-A- 3 661 878
- US-A- 3 787 323
- US-A1- 2003 105 252
- I. BEULICH: "Copolymerisation von Ethylen und sterisch anspruchsvollen Olefinen durch Metallocen-Katalysatoren" DISSERTATION, 1999, XP008081647 Hamburg in der Anmeldung erwähnt
- KAMINSKY W ET AL: "COPOLYMERIZATION OF ETHENE WITH CYCLIC AND OTHER STERICALLY HINDERED OLEFINS" MACROMOLECULAR SYMPOSIA, WILEY VCH VERLAG, WEINHEIM, DE, Nr. 173, Juni 2001 (2001-06), Seiten 211-225, XP001104625 ISSN: 1022-1360
- B.HEUER: "Alternierende Copolymerisation von Ethylen und propylen mit C1-symmetrischen Metallocen/MAO-Katalysatoren" DISSERTATION, 2004, XP008081648 Hamburg in der Anmeldung erwähnt
- HEUER B ET AL: "ALTERNATING ETHENE/PROPENE COPOLYMERS BY C1-SYMMETRIC METALLOCENE/MAO CATALYSTS" MACROMOLECULES, ACS, WASHINGTON, DC, US, Bd. 38, Nr. 8, 19. April 2005 (2005-04-19), Seiten 3054-3059, XP001227418 ISSN: 0024-9297

## Beschreibung

Die vorliegende Erfindung betrifft die Herstellung von Propylen Copolymeren unter Verwendung von 3-Methylbut-1-en als Comonomer.

3-Methylbut-1-en ist ein häufig verwendetes Monomer, welches zur Herstellung von Copolymeren und Blockcopolymeren, insbesondere von solchen des Ethens oder Propens eingesetzt wird. Solche Copolymere oder Blockcopolymere können z. B. zur Herstellung von Filmen oder Fasern verwendet werden.

JP 08-073675 beschreibt die Herstellung einer Propenpolymerkomposition (Polymer-Blend), die einen hohen Schmelzpunkt aufweist und die durch Polymerisation von 3-Methylbut-1-en an einem Titan-haltigen Katalysator und anschließende Polymerisation von Propen erhalten wird.

In DE 31 46 568 wird die Herstellung von Polyethylen beschrieben, welches bis 0,2 Massen-% 3-Methylbut-1-en aufweisen kann. Als Katalysator wird ein Chrom-Titan-Katalysator eingesetzt. In US 3,661,878 wird die Herstellung von Ethenpolymeren beschrieben, die bis zu 10 % 3-Methylbut-1-en aufweisen. Als Katalysator wird ein Katalysator aus Dimethylhydrogensiloxydimethylaluminium und Titantetrachlorid eingesetzt. In US 3,787,323 wird ebenfalls ein Titankatalysator zur Herstellung von Polyethylen eingesetzt, das bis zu 10 % 3-Methylbut-1-en aufweist.

Die Polymerisation unter Verwendung von heterogenen Titankatalysatoren ist relativ aufwändig. Es war deshalb Aufgabe der vorliegenden Erfindung ein alternatives Katalysatorsystem bereitzustellen, welches zur Herstellung von Polymeren oder Copolymeren des 3-Methylbut-1-en geeignet ist.

In neuerer Zeit werden als Polymerisationskatalysatoren häufig solche eingesetzt, die Cyclopentadienyl-Gruppen aufweisen. Die bekanntesten Katalysatoren dieser Art sind Metallocen-Katalysatoren, die zwei Cyclopentadienyl-Gruppen aufweisen.

In DE 100 52 162 wird der Einsatz von Metallocen-Katalysatoren zur Polymerisation von Olefinen beschrieben. Als Monomere können unter anderem auch Ethen oder 3-Methylbut-1-en eingesetzt werden. In US 2003/0092925 wird der Einsatz von bestimmten Metallocen-Katalysatoren in der Polymerisation von Olefinen beschrieben. In US 6,531,554 wird die Herstellung von Metallocenkatalysatoren und deren Verwendung zur Polymerisation von alpha-Olefinen beschrieben. In WO 2005/070977 wird eine Katalysatorzusammensetzung beschrieben, die mehrere Metallocenverbindungen aufweist. Die Katalysatorzusammensetzung kann zur Herstellung von Homo- und Copolymeren eingesetzt werden.

In US 5,703,187 (The Dow Chemical Company) wird ein Verfahren zur Herstellung von Copolymeren aus einem Olefin und einem sterisch gehinderten, vinylidenen Monomer beschrieben, bei dem ein Metallkomplexkatalysator eingesetzt wird, der eine substituierte oder unsubstituierte Cyclopentadienylgruppe aufweist. In US 6,072,014 werden modifizierte Katalysatoren der gleichen Art zur Polymerisation eingesetzt. Als Monomere können z. B. Ethen oder 3-Methylbut-1-en eingesetzt werden. In US 2003/0105252 wird die Polymerisation von alpha-Olefinen beschrieben, bei der ebenfalls ein Metallkomplexkatalysator eingesetzt wird, der eine Cyclopentadienylgruppe aufweist. In US 2004/0186253 wird die Herstellung von Homo-, Co- oder Blockcopolymeren beschrieben, wobei als Katalysator ein Metallocen-Precursor eingesetzt wird, der nur eine Cyclopentadienylgruppe aufweist.

In der Dissertation "Copolymerisation von Ethen und sterisch anspruchsvollen Olefinen durch Metallocen-Katalysatoren", Inken Beulich, Universität Hamburg 1999, wird die Copolymerisation von Ethen mit verschiedensten Olefinen beschrieben. Unter anderem wird auch die Copolymerisation von Ethen mit 3-Methylbut-1-en beschrieben. Als Katalysatoren für die Copolymerisation von Ethen mit 3-Methylbut-1-en werden die Verbindungen [Me₂C(3-MeCp)(Flu)]ZrCl₂ und [Me₂Si(Ind)(Flu)]ZrCl₂ beschrieben. Weitere geeignete Katalysatoren oder auch Verfahrensparameter wurden nicht genannt.

Die Aufgabe der vorliegenden Erfindung bestand deshalb in der Bereitstellung alternativer Verfahren zur Herstellung von 3-Methylbut-1-en aufweisenden Coolynieren.

Überraschenderweise wurde nun gefunden, dass mit einem Katalysator, der mindestens eine Cyclopentadienylgruppe aufweist, Polymere von Propen erhalten werden können, die von 0,1 bis 40 mol-% 3-Methylbut-1-en aufweisen.

Gegenstand der vorliegenden Erfindung ist deshalb ein Verfahren zur Herstellung von Copolymeren auf Basis von Propen als Monomer und 3-Methybut-1-en als Comonomer, wobei der Anteil des 3-Methylbut-1-en im Copolymer von 0,1 bis 40 mol-% beträgt,
dadurch gekennzeichnet,
dass die Copolymerisation in Gegenwart eines Katalysators **Ia** der Formel Z(Cp*)(Y)M(X)ₘ 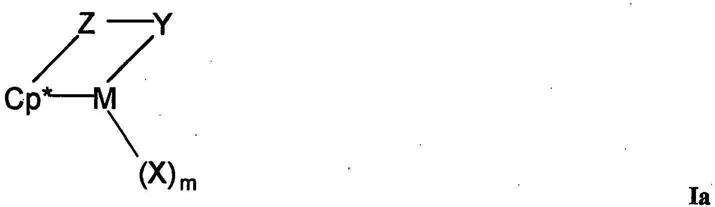
mit Cp* = Indenyl-Gruppe,
Y = Gruppe vom Cyclopentadienyl-Typ, ausgewählt aus substituierten oder unsubstituierten Cyclopentadienyl-, Indenyl-, Tetrahydroindenyl-, Octahydrofluorenyl- und Fluorenyl-Gruppen, oder anionische Ligandengruppe enthaltend Stickstoff, Phosphor, Sauerstoff oder Schwefel und bis zu 20 Atome, die kein Wasserstoff sind, wobei Cp* und Y kovalent oder über eine Gruppe Z miteinander verknüpft sein können,
M ausgewählt ist aus Zr, Ti oder Hf,
X = jeweils unabhängig ein Halogenatom, ein Pseudohalogen, ein Wasserstoffatom, eine Silyl-Gruppe, ein Phosphid, ein Sulfid oder ein organischer Rest und
m = eine Zahl, die genügt um mit den X die Valenzen von M abzusättigen, und
einer Aluminium oder Bor aufweisende Verbindung als Cokatalysators durchgeführt wird, und Z eine CR²R³- oder eine SiR²R³-Gruppe mit R² und R³ gleich oder unterschiedlich Wasserstoff oder ein aromatischer oder aliphatischer Rest ist.

Ebenfalls Gegenstand der vorliegenden Erfindung ist ein Copolymer, das als Comonomer 3-Methylbut-1-en enthält, welches dadurch gekennzeichnet ist, dass als weiteres Monomer Propen enthalten ist, der Anteil des eingebauten 3-Methylbut-1-en von 1 bis 10 mol-% beträgt und das Copolymer eine Schmelztemperatur von 90 bis 125 °C aufweist, und welches insbesondere durch das erfindungsgemäße Verfahren erhältlich ist.

Dadurch, dass bei der Verwendung von 3-Methylbut-1-en als Comonomer weite Bereiche der Molmassen der Copolymeren eingestellt werden können, kann das 3-Methylbut-1-en als Comonomer zur Herstellung von Copolymeren mit verschiedenen Eigenschaften eingesetzt werden, für die üblicherweise verschiedene Comonomere eingesetzt werden. Durch die Verwendung von 3-Methylbut-1-en als Comonomer muss damit nur noch ein Comonomer vorgehalten werden statt der bisher üblichen Vielfalt von Comonomeren.

Im Vergleich mit 1-Buten als Comonomer ist bei der Verwendung von 3-Methylbut-1-en bereits die Hälfte (molar) an Einbau des Comonomers ausreichend, um die für die Herstellung von LLDPE gewünschte Schmelzpunktabsenkung (gewünschter Schmelzpunkt von LLDPE ca. 105 bis 115 °C) zu erreichen. Auch im Vergleich mit 1-Octen im Copolymer genügen bei der Verwendung von 3-Methylbut-1-en kleinere molare Einbauraten, um die gewünschte Schmelzpunktabsenkung zu erreichen.
Mit dem erfindungsgemäßen Verfahren, bei dem 3-Methylbut-1-en als Comonomer eingesetzt wird, können außerdem Copolymere erhalten werden, die eine engere Molmassenverteilung gegenüber herkömmlichen Copolymeren aufweisen, die mit Ziegler-Natta-Katalysatoren hergestellt werden.

Durch den Einbau von 3-Methylbut-1-en kann zudem eine höhere Festigkeit der erhaltenen Copolymeren erreicht werden.

Der erfindungsgemäße Verfahren und die mit ihm hergestellten Produkte werden nachfolgend beispielhaft beschrieben, ohne dass die Erfindung auf diese beispielhaften Ausführungsformen beschränkt sein soll.

Das erfindungsgemäße Verfahren zur Herstellung von Copolymeren auf Basis von Propen als Monomer und 3-Methybut-1-en als Comonomer, wobei der Anteil des 3-Methylbut-1-en im Copolymer von 0,1 bis 40 mol-%, vorzugsweise von 0,1 bis 36 mol-% beträgt, zeichnet sich dadurch aus, dass die Copolymerisation in Gegenwart eines Katalysators **Ia** der Formel Z(Cp*)(Y)M(X)ₘ 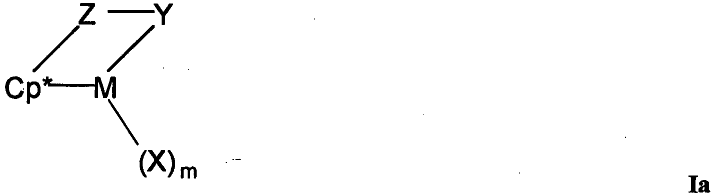
mit Cp* = Indenyl-Gruppe,
Y = Gruppe vom Cyclopentadienyl-Typ, ausgewählt aus substituierten oder unsubstituierten Cyclopentadienyl-, Indenyl-, Tetrahydroindenyl-, Octahydrofluorenyl- und Fluorenyl-Gruppen, oder anionische Ligandengruppe enthaltend Stickstoff, Phosphor, Sauerstoff oder Schwefel und bis zu 20 Atome, die kein Wasserstoff sind, wobei Cp* und Y kovalent oder über eine Gruppe Z miteinander verknüpft sein können,
M ausgewählt ist aus Zr, Ti oder Hf,
X = jeweils unabhängig ein Halogenatom, ein Pseudohalogen, ein Wasserstoffatom, eine Silyl-Gruppe, ein Phosphid, ein Sulfid oder ein organischer Rest und
m = eine Zahl, die genügt um mit den X die Valenzen von M abzusättigen, und
einer Aluminium oder Bor aufweisende Verbindung als Cokatalysators durchgeführt wird, und Z eine CR²R³- oder eine SiR²R³-Gruppe mit R² und R³ gleich oder unterschiedlich Wasserstoff oder ein aromatischer oder aliphatischer Rest ist durchgeführt wird.

Ist mehr als ein X in dem Katalysator der Formel **I** vorhanden, so sind die vorhandenen X vorzugsweise gleich.

Vorzugsweise wird bei der Copolymerisation nur eine einzige Verbindung der Formel **Ia** oder gegebenenfalls eine racemische Mischung dieser als Katalysator eingesetzt.

Bevorzugt werden solche Verbindungen der Formel **Ia** in dem erfindungsgemäßen Verfahren nicht eingesetzt, die eine Amidin-Gruppe oder ein Derivat der Amidin-Gruppe aufweisen, insbesondere solche, wie sie z. B. in US 2004/0186253 beschrieben sind, oder die einen über eine Kette mit 1 bis 3 C- und/oder Si-Atomen mit einer Cyclopentadienyl-Gruppe verknüpften Aryl-Rest aufweisen, wie sie insbesondere in US 6,531,554 beschrieben sind, oder die eine, mit einer, vorzugsweise genau einer Alkenyl-Gruppe, bevorzugt einer 5 bis 6 Kohlenstoffatome aufweisenden Alkenyl-Gruppe, substituierte Indenyl-gruppe sowie eine Dimethylsilan-tert.-Butylamido-Gruppe aufweisen, wie sie insbesondere in US 2003/0105252 beschrieben sind, oder die zwei Cyclopentadienyl-Gruppen, die über eine Brücke aus einem Kohlenstoffatom, an das außerdem ein endständig-ungesättigter Kohlenwasserstoff-Rest und ein Aryl-Rest gebunden ist, verknüpft sind, aufweisen, wie sie insbesondere in US 2003/0092925 beschrieben sind, oder die mehr als ein Metallatom aufweisen, wie sie insbesondere in US 6,072,014 beschrieben sind, oder die [Me₂C(3-MeCp)(Flu)]ZrCl₂ oder [Me₂Si(Ind)(Flu)]ZrCl₂ sind, wie sie in der Dissertation "Copolymerisation von Ethen und sterisch anspruchsvollen Olefinen durch Metallocen-Katalysatoren", Inken Beulich, Universität Hamburg 1999, Seiten 188 bis 204 oder in "W. Kaminsky, I. Beulich; Copolymerization of Ethene with Cyclic and Other Sterically Hindered Olefines", Macromol. Symp. 173, 211-225 (2001)" beschrieben sind. Auf die genannten Dokumente und deren Inhalt wird ausdrücklich verwiesen.
Als Aluminium aufweisende Verbindungen können beispielsweise aluminiumorganische Verbindungen eingesetzt werden. Als Bor aufweisende Verbindungen können z. B. Borate eingesetzt werden. Als organische Aluminiumverbindungen werden vorzugsweise Alkylalumoxane, Aluminiumalkyle oder Aluminiumalkylhalide eingesetzt. Besonders bevorzugt wird als Aluminiumorganische Verbindung Methylalumoxan (MAO) eingesetzt. Die Herstellung von Alumoxanen (engl. Aluminoxane) kann z. B. US 5,099,050, WO 2005/070977, US 2003/0092925 oder US 5,041,583 entnommen werden oder analog zu US 4,542,119 erfolgen, deren Inhalt zum Offenbarungsgehalt der vorliegenden Erfindung gehören soll. Die Herstellung geeigneter Aluminiumalkylverbindungen kann z. B. US 5,703,187 entnommen werden, deren Inhalt ebenfalls zum Offenbarungsgehalt der vorliegenden Erfindung gehören soll. Der Schrift US 5,703,187 können außerdem bevorzugte Katalysatoren der Formel **Ia** sowie deren Herstellung entnommen werden. Ebenfalls können der Schrift "Copolymerisation von Ethen und sterisch anspruchsvollen Olefinen durch Metallocen-Katalysatoren", Inken Beulich, Universität Hamburg 1999, Katalysatoren der Formel **Ia** entnommen werden. Dieser Schrift können insbesondere auch geeignete Herstellverfahren für Katalysatoren und Cokatalysatoren sowie Messmethoden zur Untersuchung der Copolymeren entnommen werden. Auch der Inhalt dieser Schrift soll zum Offenbarungsgehalt der vorliegenden Erfindung gehören.

Der Katalysator gemäß Formel **Ia** kann z. B. dadurch erhalten werden, dass eine Metallverbindung MXₘ₊₂, wobei M und X die Bedeutung wie in Formel **Ia** haben und die Anzahl der X so groß ist, dass die Verbindung MXₘ₊₂ elektroneutral ist, mit einer Verbindung, welche ein Dianion der Formel (Cp*-Z-Y)²⁻ aufweist, oder nacheinander (Reihenfolge beliebig) mit Verbindungen die ein Cp*-Anion und ein Y-Anion aufweisen, umgesetzt wird.
Die Umsetzung erfolgt vorzugsweise in einem Lösungsmittel. Als Lösungsmittel können alle Lösungsmittel oder Lösungsmittelgemische eingesetzt werden, die in Bezug auf die Umsetzung inert sind. Vorzugsweise erfolgt die Umsetzung in einem Lösungsmittel, welches auch bei der Polymerisation eingesetzt werden kann. Besonders bevorzugt erfolgt die Umsetzung zum Erhalt des Katalysators gemäß Formel **Ia** in Toluol, Ethylbenzol, Butan oder Xylol oder Mischungen davon.

Die Umsetzung zum Erhalt eines Katalysators der Formel **Ia** erfolgt vorzugsweise in einer Inertgasatmosphäre. Geeignete Inertgase sind z. B. Stickstoff oder Argon. Vorzugsweise erfolgt die Umsetzung bei einer Temperatur von -90 bis 150 °C, bevorzugt bei -20 bis 70 °C.

Verbindungen, welche ein Dianion der Formel (Cp*-Z-Y)²⁻ oder ein Anion Cp* oder Y aufweisen können z. B. die entsprechende Alkali- oder Erdalkaliverbindungen (Salze) sein. Vorzugsweise werden Salze der Formel Na₂(Cp*-Z-Y), K₂(Cp*-Z-Y), Li₂(Cp*-Z-Y), Mg(Cp*-Z-Y) oder Ca(Cp*-Z-Y) als Verbindungen, die ein Dianion der Formel (Cp*-Z-Y)²⁻ aufweisen, eingesetzt. Als Verbindungen, die ein Anion Cp* oder Y aufweisen, können z. B. Verbindungen der Formeln NaCp*, NaY, KCp*, KY, LiCp* oder LiY eingesetzt werden. Durch Umsetzen dieser Verbindungen mit einer Verbindung MXₘ₊₂ wird das entsprechende Salz KationX oder KationX₂ und der Katalysator der Formel **Ia** erhalten. Die Salze KationX oder KationX₂ können vor der weiteren Verwendung des Katalysators abgetrennt werden. Falls die Salze als Feststoffe ausfallen, kann die Abtrennung z. B. durch Filtration erfolgen.

Der Katalysator gemäß Formel **Ia** kann wie oben beschrieben in einem Vorschritt extra hergestellt werden oder aber direkt und gegebenenfalls in situ in dem Reaktionsgefäß, in dem die Polymerisation durchgeführt wird, hergestellt werden.

In dem erfindungsgemäßen Verfahren wird die Polymerisation vorzugsweise bei einem molaren Verhältnis von Metall M des Katalysators gemäß Formel **Ia** zu Aluminium des Cokatalysators von 1 zu 0,1 bis 1 zu 100000, bevorzugt von 1 zu 1 bis 10 zu 50000 und besonders bevorzugt von 1 zu 100 bis 1 zu 25000 und ganz besonders bevorzugt von 1 zu 1000 bis 1 zu 10000 durchgeführt.
Cokatalysator und Katalysator gemäß Formel **Ia** können gemeinsam oder separat dem Polymerisationsgefäß zugefügt werden. Vorzugsweise erfolgt die Zugabe separat. Besonders bevorzugt wird keine Präpolymerisation durchgeführt.

Die Copolymerisation wird in dem erfindungsgemäßen Verfahren vorzugsweise bei einem molaren Verhältnis von Monomeren (nicht verbauten) zu Katalysator gemäß Formel **Ia** von 1 x 10¹⁰ zu 1 bis 100 zu 1, bevorzugt von 1 x 10⁸ zu 1 bis 500 zu 1 und besonders bevorzugt von 1 x 10⁶ zu 1 bis 1000 zu 1 durchgeführt.
In dem erfindungsgemäßen Verfahren kann die Copolymerisation in der flüssigen Phase oder in der Gasphase durchgeführt werden. Vorzugsweise erfolgt die Copolymerisation in der Flüssigphase, da höhere Aktivitäten erreicht werden und ein einheitlicheres Polymer erhalten wird. Zudem wird bei der Copolymerisation in der Gasphase ein Träger benötigt, der eventuell wieder abgetrennt werden muss.

Es kann vorteilhaft sein, wenn die Copolymerisation in Gegenwart eines Lösungsmittels durchgeführt wird. Als Lösungsmittel können alle Flüssigkeiten eingesetzt werden, die sich bei der Copolymerisation inert verhalten. Vorzugsweise wird in dem erfindungsgemäßen Verfahren die Copolymerisation in einem organischen Lösemittel ausgewählt aus aliphatischen Kohlenwasserstoffen wie z. B. Hexan, Heptan, Dekan, Butan oder Cyclohexan, aus aromatischen Kohlenwasserstoffen, wie z. B. Benzol oder aus Kohlenwasserstoffen, die sowohl aromatische als auch aliphatische Bestandteile aufweisen, wie z. B. Toluol, Xylol oder Ethylbenzol, durchgeführt. Es kann vorteilhaft sein, wenn Lösungsmittel eingesetzt werden, die geeignet sind den Katalysator gemäß Formel **Ia** aufzulösen. Solche Lösemittel können insbesondere z. B. Benzol, Toluol, o-, m-, p-Xylol, Ethylbenzol, Butylbenzol, Mesitylen, Hexan und Heptan und Naphthalin sein. Besonders bevorzugt wird in dem erfindungsgemäßen Verfahren ein Lösemittel, ausgewählt aus Toluol, Xylol, Hexan, Butan und Heptan eingesetzt.

In dem erfindungsgemäßen Verfahren kann die Copolymerisation in einem weiten Temperaturbereich durchgeführt werden. Vorzugsweise wird die Copolymerisation bei einer Temperatur von -30 °C bis 250 °C, bevorzugt bei einer Temperatur von 10 bis 120 °C und besonders bevorzugt bei einer Temperatur von 35 bis 80 °C, insbesondere von 50 bis 75 °C durchgeführt. Insbesondere in den beiden letztgenannten Temperaturbereichen kann die Copolymerisation mit einer besonders hohen Katalysatoraktivität und damit sehr ökonomisch durchgeführt werden.

Die Copolymerisation kann im erfindungsgemäßen Verfahren bei Unterdruck, Normaldruck oder bei erhöhtem Druck durchgeführt werden. Vorzugsweise wird die Copolymerisation bei einem Druck von 0,1 bis 10 MPa, bevorzugt bei einem Druck von 0,1 bis 1 MPa durchgeführt.

Im erfindungsgemäßen Verfahren beträgt der molare Anteil an 3-Methylbut-1-en Monomer im Reaktionsgemisch der Copolymerisation an der Summe der Monomeren von 3-Methylbut-1-en und Propen zumindest 20 %. Vorzugsweise beträgt der molare Anteil an 3-Methylbut-1-en an den Monomeren im Ansatz von 40 bis 80 %.

Ganz besonders bevorzugt wird als Katalysator der Formel **Ia** ein Katalysator gemäß der Formeln **II** oder **III** 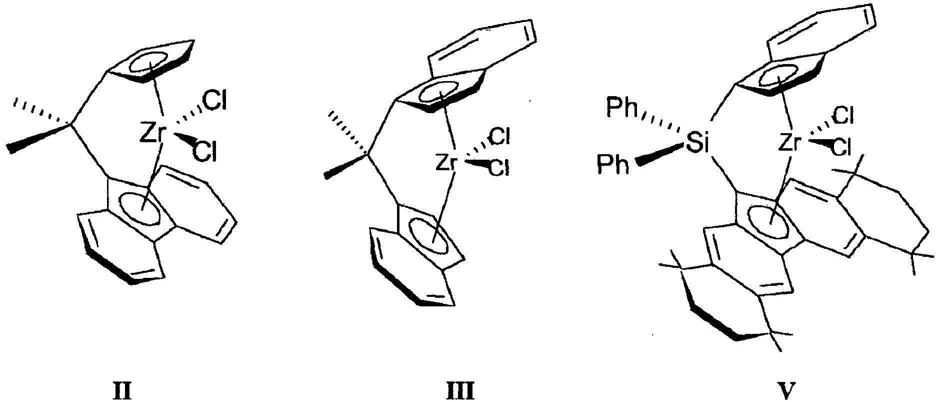 eingesetzt wird.

Die Herstellung eines Katalysators der Formel **II** kann z. B., wie in EP 0 351 391 beschrieben, erfolgen. Die Herstellung eines Katalysators der Formel **III** kann z. B. wie von Spaleck et al. in New. J. Chem., 14, 6 (1990) 499 beschrieben, erfolgen. Die Verbindung **III** kann auch wie folgt erhalten werden: *Bis*(2-Indenyl)-propan wird in Diethylether suspendiert und bei -79 °C mit n-Bu-Li in Hexan deprotoniert. Die Reaktionsmischung wird für 3 Stunden bei Raumtemperatur gerührt. Es wird festes ZrCl₄ zugegeben und über Nacht bei Raumtemperatur weiter gerührt. Die erhaltene Suspension wird auf Celite gegeben und mit Fluorbenzol extrahiert. Das Fluorbenzol wird anschließend im Vakuum abkondensiert. Der erhaltene Rückstand (Verbindung **III**) wird mehrfach mit Diethylether gewaschen und aus Fluorbenzol/Diethylether umkristallisiert.

Ein besonders bevorzugter Katalysator der Formel **Ia** ist ein Katalysator gemäß Formel **VI**, der bei der Copolymerisation von 3-Methylbut-1-en mit Ethen oder Propen eingesetzt werden kann. Eine spezielle Ausführungsform dieses Katalysators ist bereits oben unter Formel V beschrieben worden. Gegenstand der vorliegenden Erfindung ist deshalb auch ein Katalysator gemäß Formel **VI** 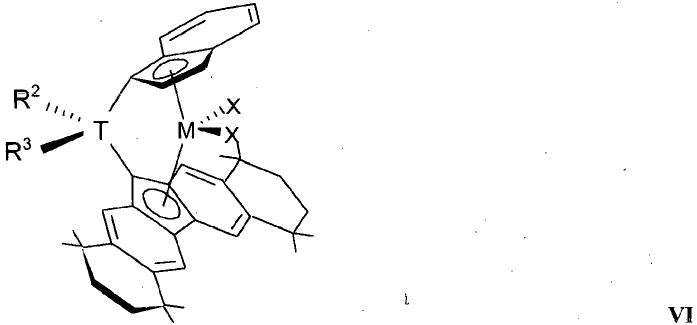 mit T = C oder Si, R² und R³ gleich oder verschieden H, Kohlenwasserstoffrest mit 1 bis 20 Kohlenstoffatomen, vorzugsweise Methyl-, Ethyl- oder Phenyl-Rest, X = jeweils unabhängig ein Halogenatom, ein Pseudohalogen, wie z. B. ein Cyanid oder Azid, ein Wasserstoffatom, eine Silyl-Gruppe, ein Phosphid, ein Sulfid oder ein organischer Rest, wie z. B. ein Alkyl-, Aryl-, Amid-, Aryloxy-, Alkoxy-, Acetyl- oder Acetylacetonat-Rest, insbesondere ein organischer Rest der 1 bis 20 Kohlenstoffatome aufweist, vorzugsweise Cl und M = Zr, Ti oder Hf.

Der Katalysator gemäß Formel **VI** kann z. B. dadurch erhalten werden, dass wie in der Dissertation "Alternierende Copolymerisation von Ethen und Propen mit Cl-symmetrischen Metallocen/MAO-Katalysatoren", B. Heuer, Arbeitskreis Kaminsky, Universität Hamburg 2004 am Beispiel eines Katalysators der Formel V beschrieben, zunächst 1,1,4,4,7,7,10,10-octamethyl-1,2,3,4,7,8,9,10-octahydro-bibenzofluoren (OMOHBBF) hergestellt wird. Dieses kann dadurch erhalten werden, dass 100 g 2,5-Dichlor-2,5-dimethylhexan (0,546 mol; C8H16Cl2; M = 183,12 g/mol) und 45,3 g Fluoren (0,273 mol; Cl3H10; M = 166,22 g/mol) in 800 ml Nitromethan vorgelegt werden und eine Lösung aus 44,6 g Aluminiumchlorid (0,334 mol; AlCl3; M = 133,34 g/mol) in 60 ml Nitromethan langsam zugetropft wird. Nach etwa einem Drittel der Aluminiumchloridzugabe verfärbt sich der Ansatz von rot/braun zu blau/grün unter leichter Erwärmung und Gasentwicklung. Nach ca. 10 Minuten lässt die Gasentwicklung nach und der Rest der Aluminiumchloridlösung wird zugegeben. Der Ansatz wird über Nacht gerührt und weist anschließend eine dunkelviolette Farbe auf. Nach Filtrieren wird der violette Filterrückstand in 400 ml Wasser aufgeschlämmt, wobei die Färbung verschwindet. Es werden 400 ml *n*-Hexan zugegeben und die Mischung über Nacht gerührt. Der verbleibende Niederschlag wird getrennt, mit der organischen Phase zusammengegeben und das Lösungsmittel entfernt. Der Rückstand wird mit 300 ml heißem *n*-Hexan versetzt, filtriert und solange mit *n*-Hexan gewaschen, bis das Filtrat farblos bleibt. Das farblose Produkt wird im Ölpumpenvakuum getrocknet.

Anschließend wird Chlor-diphenyl-9-(1,1,4,4,7,7,10,10-octamethyl-1,2,3,4,7,8,9,10-octahydrodibenzofluorenyl)Silan (CDOODBFS) dadurch hergestellt, dass 11,6 g (1,1,4,4,7,7,10,10-octamethyl-1,2,3,4,7,8,9,10-octahydro-dibenzofluorenyl)lithium (30 mmol; C29H37Li; M = 392,56 g/mol) in 150 ml *n*-Pentan suspendiert und langsam über eine Kanüle zu einer Lösung aus 9,6 ml Dichlordiphenylsilan (45 mmol; C12H10SiCl2; M = 253,21 g/mol; d = 1,20 g/cm3) in 150 ml *n*-Pentan gegeben und über Nacht gerührt werden. Das Lösungsmittel wird anschließend entfernt, der Rückstand in 130 ml Diethylether aufgenommen und über Celite filtriert. Anschließend wird das Lösungsmittel auf etwa 30 ml eingeengt und 30 ml *n*-Hexan zugegeben. Das Gemisch wird weiter eingeengt und bei ca. -20 °C kristallisiert das Produkt zu farblosen Kristallen.

Wiederum anschließend wird Diphenyl-1-indenyl-9-(1,1,4,4,7,7,10,10-octamethyl-1,2,3,4,7,8,9,10-octahydro-dibenzofluorenyl)silan dadurch hergestellt, dass 4,09 g Chlor-diphenyl-9-(1,1,4,4,7,7,10,10-octamethyl-1,2,3,4,7,8,9,10-octahydro-dibenzofluorenyl)silan (6,78 mmol; C41H47SiCl; M = 603,37 g/mol) in 100 ml Diethylether gelöst und mit 828 mg Indenyllithium (6,78 mmol; C9H7Li; M = 122,10 g/mol) versetzt werden. Der Ansatz wird zehn Tage unter Rückfluss erhitzt und anschließend mit 100 ml Wasser hydrolysiert. Die organische Phase wird abgetrennt, die wässrige Phase dreimal mit Diethylether extrahiert, und die gesammelten etherischen Phasen über Natriumsulfat getrocknet. Das Produkt fällt aus einer Lösung aus *n*-Hexan mit Spuren Diethylether als weißer Feststoff aus.

Diphenylsilyl-(1-indenyl-9-(1,1,4,4,7,7,10,10-octamethyl-1,2,3,4,7,8,9,10-octahydrodibenzo-fluorenyl))-zirkoniumdichlorid als Katalysator gemäß Formel **VI** kann dann dadurch erhalten werden, dass 1,0 g Diphenyl-1-indenyl-9-(1,1,4,4,7,7,10,10-octamethyl-1,2,3,4,7,8,9,10-octahydro-dibenzofluorenyl)silan (1,46 mmol; C50H54Si; M = 683,07 g/mol) in 40 ml Diethylether gelöst, mit 2 Äquivalenten *n*-Butyllithium (2,93 mmol; C4H9Li; M = 64,06 g/mol) versetzt und über Nacht gerührt werden. Zu der orange-farbenen Lösung werden 341 mg Zirkontetrachlorid (1,46 mmol, ZrCl4; M = 233,04 g/mol) gegeben und erneut über Nacht gerührt. Aus der intensiv roten Lösung mit feinem weißem Niederschlag wird das Lösungsmittel entfernt, der Rückstand in 50 ml Dichlormethan gelöst und durch Celite filtriert. Anschließend wird das Lösungsmittel erneut entfernt, der Rest in 10 ml Diethylether gelöst und mit 10 ml n-Hexan versetzt. Dem Gemisch wird Lösungsmittel entzogen, bis ein roter Niederschlag auftritt. Anschließend wird das Produkt abfiltriert und es wird ein Katalysator der Formel **VI** erhalten.

Die Copolymerisation erfolgt vorzugsweise für eine Dauer von 15 Minuten bis 4 Stunden, vorzugsweise von 0,5 bis 2 Stunden. Die Copolymerisation kann auf einfache Weise durch Unterbrechung der Monomerzufuhr oder durch Zugabe eines Alkohols, wie z. B. Ethanol abgebrochen werden. Vorzugsweise wird die Copolymerisation durch Zugabe eines Alkohols abgebrochen, da es beim Abbruch durch Unterbrechung der Monomerzufuhr zur weiteren Copolymerisation unter nicht konstanten Bedingungen kommen kann, da die Copolymerisation so lange weiterläuft, wie Monomer zur Verfügung steht. Die Dauer der Copolymerisation kann z. B. durch Variation der Menge des verwendeten Katalysators eingestellt werden. Die Copolymerisation kann diskontinuierlich oder kontinuierlich durchgeführt werden.

Das bei der Copolymerisation erhaltene Copolymerisationsgemisch kann auf bekannt Weise aufgearbeitet werden. Vorzugsweise erfolgt die Aufarbeitung so, dass dem Copolymerisationsgemisch ein Mittel zugefügt wird, mit welchem der Katalysator zerstört wird. Ein geeignetes Mittel kann z. B. ein Alkohol, insbesondere Ethanol sein. Vorzugsweise wird soviel an Mittel dem Copolymerisationsgemisch zugegeben, dass das Mittel im molaren Überschuss, vorzugsweise im zumindest 2- bis 20-fachen molaren Überschuss in Bezug auf das Metall M des Katalysators der Formel **Ia** zugegeben wird.
Es kann vorteilhaft sein, wenn bei der Aufarbeitung des Copolymerisationsgemisches dieses mit einer Säure, vorzugsweise mit einer 5 bis 20 Massen-%igen Lösung einer Säure, insbesondere Salzsäure, in Wasser oder einem Wasser-Ethanol Gemisch behandelt wird. Auf diese Weise können Katalysatorreste aus dem Copolymerisationsgemisch herausgelöst werden. Anschließend wird vorzugsweise soviel eines Mittels, welches geeignet ist, das Copolymerisationsgemisch zu neutralisieren, vorzugsweise Natriumhydrogencarbonat, besonders bevorzugt 1 bis 50 Massen-%ige, vorzugsweise 5 bis 10 Massen-%ige Natriumhydrogencarbonat-Lösung (in Wasser oder einem Wasser-Ethanol Gemisch), dem Copolymerisationsgemisch zugegeben, dass das Copolymerisationsgemisch neutral ist, also bevorzugt einen pH-Wert von ca. 7 aufweist. Das so erhaltene Gemisch wird vorzugsweise mit Wasser, bevorzugt mit demineralisiertem Wasser gewaschen. Eine solche Wäsche kann in einer geeigneten Vorrichtung z. B. in einer Extraktionskolonne oder einem Schütteltrichter durchgeführt werden.

Aus dem so behandelten Copolymerisationsgemisch können Copolymere, die als Feststoff im Copolymerisationsgemisch vorliegen, mechanisch, z. B. durch Filtration oder Abdekantieren abgetrennt werden. Zur Abtrennung von löslichen Copolymeren kann das Copolymerisationsgemisch soweit eingeengt werden, dass die Copolymere als Feststoff ausfallen. Dies kann insbesondere thermisch erfolgen. Beim Einengen ausgefallenes Copolymer kann wiederum mechanisch von dem Copolymerisationsgemisch abgetrennt werden.

Es kann vorteilhaft sein, wenn die so erhaltenen Copolymeren einem Trocknungsprozess unterzogen werden. Auf diese Weise kann verhindert werden, dass evtl. gesundheitsgefährdende Lösungsmittel, die evtl. im Copolymerisationsprozess eingesetzt wurden, bei der Verarbeitung der Copolymere unkontrolliert an die Umgebung abgegeben werden. Die Trocknung kann in dafür geeigneten Apparaturen, im Labor z. B. in einem Trockenschrank erfolgen. Vorzugsweise erfolgt die Trocknung bei einer Temperatur von 30 bis 60 °C.

In dem erfindungsgemäßen Verfahren können 3-Methylbut-1-en, und Propen eingesetzt werden, welche auf jede erdenkliche Art erhalten worden sein können. Je nachdem, ob die Monomere als Reinstoffe oder in einem Gemisch mit anderen Komponenten vorliegen, kann es notwendig oder vorteilhaft sein, ein solches Gemisch chemisch oder physikalisch zu behandeln. Eine solche Behandlung ist insbesondere dann notwendig, wenn das Gemisch Komponenten aufweist, die die Copolymerisationsreaktion verlangsamen oder ganz zum Erliegen bringen können. Solche Komponenten können insbesondere Katalysatorgifte sein. Bekannte Komponenten, die einen negativen Einfluss auf die Copolymerisationsreaktion haben können, sind z. B. Schwefel, Sauerstoff und sauerstoffhaltige Verbindungen, wie z. B. Wasser. Eine chemische Behandlung könnte z. B. dadurch erfolgen, dass die unerwünschten Komponenten mit einer anderen Verbindung umgesetzt wird, die leicht aus dem Gemisch entfernt werden kann. So kann z. B. Wasser aus solchen Gemischen durch Umsetzung mit Alkalimetallen entfernt werden. Eine physikalische Behandlung könnte beispielsweise eine thermische Behandlung, wie z. B. eine Destillation, sein oder aber ein Filtrieren, Dekantieren oder ähnliches sein, oder eine Kombination davon sein. Besonders bevorzugt erfolgt eine Aufreinigung des eingesetzten 3-Methylbut-1-en durch ein gekoppeltes Umkondensieren und Rühren mit Triisobutylaluminium (TIBA).

Es kann vorteilhaft sein, wenn in dem erfindungsgemäßen Verfahren 3-Methylbut-1-en eingesetzt wird, dass durch Wasserabspaltung aus 3-Methylbutanol erhalten wurde. Dieses 3-Methylbut-1-en hat den Vorteil, dass es ohne Durchführung eines chemischen Reinigungsschrittes direkt eingesetzt werden kann. Besonders bevorzugt wird in dem erfindungsgemäßen Verfahren ein 3-Methylbut-1-en eingesetzt, welches durch die Schritte
a) Hydroformylierung von Isobuten zu 3-Methylbutanal,
b) Hydrierung des 3-Methylbutanal zum 3-Methylbutanol und
c) Wasserabspaltung aus 3-Methylbutanol erhalten wird,
wobei das aus dem Schritt c) erhaltene 3-Methylbut-1-en vorzugsweise ohne Durchführung eines chemischen Reinigungsschrittes direkt eingesetzt wird.

Die Hydroformylierung gemäß Schritt a) kann auf bekannte Art und Weise durchgeführt werden. Vorzugsweise wird die Hydroformylierung in Gegenwart eines Rhodiumkomplexkatalysators durchgeführt. Geeignete Liganden sind beispielsweise Phosphit- oder Phosphin-Liganden, vorzugsweise substituierte oder unsubstituierten Triphenylphosphine oder Triphenylphosphite, bevorzugt Triphenylphosphin oder Triphenylphosphit. Der Verfahrensschritt der Hydroformylierung kann z. B. wie in EP 0 562 451 oder DE 026 27 354 beschrieben durchgeführt werden. Die Reaktionstemperaturen betragen bevorzugt von 70 bis 150 °C, vorzugsweise von 100 bis 130 °C. Die Verfahrensdrücke betragen vorzugsweise von 2 bis 20 MPa, bevorzugt von 3 bis 6 MPa.

Als Liganden bzw. Komplexkatalysatoren können insbesondere solche eingesetzt werden, wie sie in EP 0 155 508 (UCC), EP 0 213 639 (UCC), EP 0 214 622 (UCC), EP 0 471 071 (BASF) EP 1 099 677 (OXENO), EP 1 099 678 (OXENO) oder EP 1 201 675 (OXENO) beschrieben worden sind. Besonders gut geeignete Rhodium-Komplexkatalysatoren mit einzähnigen Phosphitliganden sind beispielsweise Triarylphosphite, deren Arylgruppen sowohl in ortho-Stellung zum Phosphit-Sauerstoff eine sperrige Gruppe aufweisen als auch in m- oder p-Stellung substituiert sind, wie z. B. Tris(2,4-di-tert.-butyl-phenyl)phosphit. Die Hydroformylierung von Isobuten unter Verwendung eines Katalysatorsystems, das aus Rhodium und einem Bisphosphit besteht, wird beispielsweise in den Patentschriften US 4,668,651, US 4,769,498 und WO 85/03702 beschrieben. Auf alle genannten Schriften wird ausdrücklich verwiesen und deren Offenbarungsgehalt soll Gegenstand der vorliegenden Beschreibung sein.

Zur Hydrierung können im Verfahrensschritt b) als Katalysator z. B. Nickel-, Kupfer-, Kupfer/Nickel-, Kupfer/Chrom-, Kupfer/Chrom/Nickel-, Zink/Chrom-, Nickel/Molybdän-Katalysatoren eingesetzt werden. Die Katalysatoren können trägerfrei sein, oder die hydrieraktiven Stoffe bzw. ihre Vorläufer können auf Trägem, wie beispielsweise Siliziumdioxid oder Aluminiumoxid, aufgebracht sein. Bevorzugte Katalysatoren, an denen die Hydroformylierungsgemische hydriert werden, weisen jeweils 0,3 bis 15 Massen-% Kupfer und Nickel sowie als Aktivatoren 0,05 bis 3,5 Massen-% Chrom und vorteilhaft 0,01 bis 1,6 Massen-%, vorzugsweise 0,02 bis 1,2 Massen-% einer Alkalikomponente auf einem Trägermaterial, vorzugsweise Aluminiumoxid und Siliziumdioxid auf. Die Mengenangaben beziehen sich auf den noch nicht reduzierten Katalysator. Die Alkalikomponente ist optional. Die Katalysatoren werden vorteilhaft in einer Form eingesetzt, in der sie einen geringen Strömungswiderstand bieten, z. B. in Form von Granalien, Pellets oder Formkörpern, wie Tabletten, Zylindern, Strangextrudaten oder Ringen. Sie werden zweckmäßig vor ihrem Einsatz aktiviert, z. B. durch Erhitzen im Wasserstoffstrom.

Die Hydrierung, bevorzugt eine Flüssigphasenhydrierung, wird vorzugsweise bei einem Gesamtdruck von 0,5 bis 50 MPa, bevorzugt von 1,5 bis 10 MPa durchgeführt. Eine Hydrierung in der Gasphase kann auch bei niedrigeren Drücken durchgeführt werden, wobei dann entsprechend große Gasvolumina vorliegen. Werden mehrere Hydrierungsreaktoren eingesetzt, können die Gesamtdrücke in den einzelnen Reaktoren innerhalb der genannten Druckgrenzen gleich oder verschieden sein. Die Reaktionstemperaturen können bei der Hydrierung in Verfahrensschritt b) in flüssiger oder gasförmiger Phase in der Regel von 120 bis 220 °C, insbesondere von 140 bis 180 °C betragen. Solche Hydrierungen sind beispielsweise in den Patentanmeldungen DE 198 42 369 und DE 198 42 370 beschrieben, auf welche hier ausdrücklich verwiesen wird.

Die Hydrierung wird bevorzugt in Gegenwart von Wasser durchgeführt. Das benötigte Wasser kann im Reaktorzulauf enthalten sein. Es ist jedoch auch möglich, Wasser an geeigneter Stelle in die Hydrierapparatur einzuspeisen. Bei Gasphasenhydrierung wird Wasser zweckmäßig in Form von Wasserdampf zugeführt. Ein bevorzugtes Hydrierverfahren ist die Flüssigphasenhydrierung unter Zusatz von Wasser, wie sie beispielsweise in DE 100 62 448 beschrieben ist. Besonders bevorzugt wird Hydrierung bei einem Wassergehalt von 0,05 bis 10 Massen-%, insbesondere 0,5 bis 5 Massen-%, ganz besonders 1 bis 2,5 Massen-% durchgeführt. Der Wassergehalt wird dabei im Hydrieraustrag bestimmt.

Aus dem nach der Hydrierung gemäß Verfahrensschritt b) erhaltenen 3-Methylbutan-ol in dem Verfahrensschritt c) durch Wasserabspaltung 3-Methylbut-1-en hergestellt. Die Dehydratisierung kann in der Gas- oder Flüssig/Gas-Mischphase durchgeführt werden. Der Verfahrensschritt c) kann kontinuierlich oder diskontinuierlich durchgeführt werden. Der Verfahrensschritt c) kann an suspendierten oder stückigen im Festbett angeordneten Katalysatoren durchgeführt werden. Die Wasserabspaltung wird wegen der einfachen Abtrennung der Reaktionsprodukte aus dem Reaktionsgemisch bevorzugt an festen Katalysatoren im Temperaturbereich von 200 bis 500 °C in der Gas- oder Gas/Flüssig-Mischphase durchgeführt. Besonders bevorzugt wird eine kontinuierliche Dehydratisierung an einem im Festbett angeordneten Katalysator durchgeführt. Als Katalysatoren können Oxide der Erdalkalimetalle, des Aluminiums, Indiums, Galliums, des Siliziums, Scandiums, Yttriums, Lanthans, Titans, Zirkoniums, Thoriums sowie der seltenen Erden verwendet werden. Es können auch Mischoxide und Kombinationen der obigen Oxide eingesetzt werden. Bei einigen Katalysatoren kann durch Zugabe von Alkalioxiden eine bestimmte Acidität eingestellt werden.

Aus der wissenschaftlichen Fachliteratur sind beispielsweise die folgenden geeigneten Katalysatoren bekannt:
NiO/Al₂O₃; CuO/Al₂O₃; Al₂O₃ (J. Mol. Catal. A. Chem. (1997), 121 (2-3), S. 157-159);
ZrO₂; sulfatisiertes ZrO₂ (J. Mol. Cat. A. Chem (1997), 118 (1), S. 88-89);
Al₂O₃; Co₂O₃; ThO₂; In₂O₃ (J. Catal. (1988), 110 (2), S. 416-418);
HfO₂/ZrO₂ (J. Phys. Chem. (1980), 84 (1), 55-56);
Al₂O₃/Na₂O; ThO2 (J. Catal. (1981), 68 (2), S. 383-387);
ThO₂ (J. Org. Chem. (1967), 32 (11), 3386-3389);
La₂O₃ (Z. Phys. Chem.(1985), 144, S. 157-163);
Ga₂O₃ (J. Org. Chem. (1977), , 44 (13), S. 2142-2145);
ThO₂; Al₂O₃ (J. Org. Chem. (1972), 37 (8), S. 1240-1244);

Vorzugsweise erfolgt die Auswahl der Katalysatoren und der Reaktionsbedingungen so, dass die Bildung von Nebenprodukten, wie beispielsweise von Ethern sowie die Isomerisierung der gebildeten 1-Olefine zu Olefinen mit innenständigen Doppelbindungen weitgehend vermieden wird. Für die Herstellung von 3-Methybut-1-en werden deshalb bevorzugt basische oder stark basische. Katalysatoren eingesetzt. Die bevorzugt eingesetzten Katalysatoren können als Hauptkomponenten Aluminiumoxid (Al₂O₃) und/oder Zirkoniumoxid (ZrO₂) sowie Alkalimetall- und/oder Erdalkalioxide aufweisen. Als weitere Komponenten können im Katalysator Titandioxid, Siliziumdioxid und/oder Thoriumoxid mit 0,01 bis 3 Massen-%, bevorzugt 0,5 bis 5 Massen-% enthalten sein
Der Anteil an basischen Metalloxiden (Hydroxide werden in Oxide umgerechnet) im Katalysator beträgt bevorzugt von 0,01 bis 10 Massen-%, besonders bevorzugt von 0,1 bis 5 Massen-%, insbesondere bevorzugt von 0,1 bis 3 Massen-%. Bevorzugte Alkalimetalloxide sind Natrium- und/oder Kaliumoxid. Als Erdalkalimetalloxide werden bevorzugt Magnesium-, Strontium- und/oder Bariumoxid eingesetzt. Besonders bevorzugt erfolgt die Wasserabspaltung im Verfahrensschritt c) an einem festen Katalysator durchgeführt wird, der formal aus Aluminiumoxid und Bariumoxid besteht. Als Katalysator wird im Verfahrensschritt c) ganz besonders bevorzugt ein mit Bariumoxid (BaO) modifiziertes γ-Aluminiumoxid, welches formal aus Bariumoxid und Aluminiumoxid besteht, verwendet.

Bevorzugt werden γ-Aluminiumoxide mit einer BET-Oberfläche von 80 bis 350 m²/g, bevorzugt 120 bis 250 m²/g (bestimmt durch N₂-Absorption gemäß DIN 66131) eingesetzt. Die Katalysatoren werden nach bekannten Methoden hergestellt. Gängige Methoden sind beispielsweise Fällung, Tränkung oder Besprühung eines Al₂O₃-Körpers mit einer entsprechenden Salzlösung und anschließende Calcinierung.

Ebenso vorteilhaft kann es sein, wenn Katalysatoren eingesetzt werden, wie sie in DE 103 59 628 beschrieben werden und die einen Anteil an Zirkoniumdioxid von 80 bis 99 Massenteile, an Yttriumoxid von 0,5 bis 10 Massenteile und an Erdalkali- oder Alkalioxiden von 0,1 bis 3 Massenteilen aufweisen.

Bei der kontinuierlichen Wasserabspaltung können unterschiedliche Verfahrensvarianten eingesetzt werden. Der Verfahrensschritt c) kann z. B. adiabatisch, polytrop oder praktisch isotherm, d. h. mit einer Temperaturdifferenz von typischerweise kleiner als 10 °C, durchgeführt werden. Der Verfahrensschritt kann ein- oder mehrstufig durchgeführt werden. Im letzteren Fall können alle Reaktoren, zweckmäßig Rohrreaktoren, adiabatisch oder praktisch isotherm betrieben werden. Ebenfalls ist es möglich, einen oder mehrere Reaktoren adiabatisch und die anderen praktisch isotherm zu betreiben. Bevorzugt wird die Wasserabspaltung im geraden Durchgang betrieben. Sie kann jedoch auch unter Produktrückführung betrieben werden. Bei Betrieb im geraden Durchgang beträgt die spezifische Katalysatorbelastung 0,01 bis 30 bevorzugt von 0,1 bis 10 kg Alkohol je kg Katalysator und je Stunde. Bei der Wasserabspaltung gemäß Verfahrensschritt c) beträgt die Temperatur in der Katalysatorschicht vorzugsweise von 200 bis 450 °C, insbesondere von 250 bis 400 °C. Die Wasserabspaltung (Dehydratisierung) kann unter vermindertem Druck, Überdruck oder bei Normaldruck durchgeführt werden.

Das 3-Methylbutanol kann in reiner Form oder in Verdünnung in den Dehydratisierungsreaktor gefahren werden. Als Verdünnungsmittel können inerte Gase oder Gasgemische, wie beispielsweise Stickstoff, Wasserstoff, Kohlenmonoxid, Kohlendioxid, Synthesegas, Methan oder Wasserdampf, oder unter Reaktionsbedingungen inerte organische Lösungsmittel, die vom Reaktionsaustrag leicht abgetrennt werden können, eingesetzt werden.

Um eine möglichst hohe Selektivität hin zur 3-Methylbut-1-en Bildung zu erzielen, hat es sich als vorteilhaft erwiesen, wenn nur ein Teilumsatz des eingesetzten Alkohols angestrebt wird. Bei einem Umsatz von 99 % kann z. B. eine Selektivität von 92 % erreicht werden. Bevorzugt wird der Verfahrensschritt c) so ausgeführt, dass der Umsatz im geraden Durchgang mindestens 30 %, vorzugsweise von 30 bis 99 % und bevorzugt von 30 bis 90 % beträgt.

Als Produkt der Verfahrensstufe c) wird ein 3-Methylbut-1-en aufweisendes Gemisch erhalten. Vorzugsweise wird in Verfahrensschritt c) ein Gemisch erhalten, aus dem 3-Methylbut-1-en abgetrennt wird. Das Reaktionsgemisch kann, gegebenenfalls nach Wasserabtrennung, destillativ in 3-Methylbutan-1-ol, 3-Methylbut-1-en und Nebenprodukte getrennt werden.

Zwischen oder nach den Schritten a), b) und/oder c) können ein oder mehrere Aufarbeitungsschritt/e durchgeführt werden. Vorzugsweise werden solche Aufarbeitungsschritte durchgeführt, bei denen die gewünschten Produkte von nicht umgesetzten Edukten, Nebenprodukten und/oder Katalysatoren durch physikalische Methoden, wie z. B. Dekantieren, Filtrieren, Extrahieren oder Destillieren, getrennt werden. Geeignete Trennverfahren sind dem Fachmann bekannt und es entspricht dem Können des Fachmanns geeignete Trennmethoden und -parameter für ein Trennproblem auszuwählen.

Mit dem erfindungsgemäßen Verfahren können Copolymere von 3-Methylbut-1- en mit Propen hergestellt werden. Je nach verwendeten Verfahrensparameter können Copolymere mit sehr unterschiedlichen Eigenschaften hergestellt werden. Besonders bevorzugt werden mit dem erfindungsgemäßen Verfahren die erfindungsgemäßen Copolymere hergestellt, die als Bausteine 3-Methylbut-1-en und Propen enthalten.

Die erfindungsgemäßen Copolymeren, 3-Methylbut-1-en enthaltend, zeichnen sich dadurch aus, dass als weiteres Monomer Propen enthalten ist, der Anteil des eingebauten 3-Methylbut-1-en von 1 bis 10 mol-% beträgt und das Copolymer eine Schmelztemperatur von 90 bis 125 °C aufweist.

Die erfindungsgemäßen Copolymeren können eine Molmasse M_{w} (Gewichtsmittel der Molmasse) von 2.500 bis 2.200.000 g/mol, vorzugsweise von 5.000 bis 500.000 aufweisen. Die Molmasse kann durch Gelpermeationschromatographie bestimmt werden. Im Rahmen der vorliegenden Erfindung wurden die Molmassen mit einem Gelpermeationschromatograph der Firma Waters, Typ: Hochtemperatur Alliance GPCV 2000, bestimmt. Als Lösungsmittel wurde 1,2,4-Trichlorbenzol verwendet. Es wurde vier Styragel-Säulen (HT6, HT5, HT4, HT3) und eine Vorsäule eingesetzt Als Säulenmaterial wurde Styroldivinylbenzol = SDV (der Firma PSS9) / Styragel (der Firma Walters) eingesetzt. Die Durchflußrate betrug 1 ml/min, und die Messungen erfolgten bei 140 °C. Es wurden jeweils 0,15 bis 0,2 ml Probenlösung mit einer Konzentration an Copolymeren von 0,2 Massen-% injiziert. Mit Hilfe engverteilter Polystyrolstandards (Firma PSS) wurde der Säulensatz kalibriert. Die Retentionszeiten wurden den Polystyrolmolekulargewichten und zugehörigen K- und α-Werten über Polynome fünften Grades unter Verwendung der universellen Kalibrierung zugeordnet. Als Detektor diente ein interner (RI)-Detektor, der mit einem internen Viskodetektor verbunden war. Die Datenaufnahme und die Auswertung der Daten erfolgte mit dem Waters Millenium32 GPC Programm (Version 3,20, der Firma Waters).
Das erfindungsgemäße Copolymer weist vorzugsweise eine Schmelztemperatur, falls zwei Schmelztemperaturen existieren die höhere Schmelztemperatur, von unterhalb Raumtemperatur bis 130 °C, vorzugsweise von Raumtemperatur bis 130 °C, bevorzugt von 80 bis 125, besonders bevorzugt von 90 bis 120 °C und ganz besonders bevorzugt von 100 bis 115 °C, insbesondere von 105 bis 115 °C auf. Die Existenz von zwei relativ nah beieinander liegender Schmelztemperaturen bei Propen/3-Methylbut-1-en-Copolymeren wird in der Literatur auf Rekristallisationsprozesse bzw. auf das Vorliegen von zwei kristallinen Phasen während der DSC-Messung zurückgeführt, vergleiche z. B. Graef et al., Journal of Polymer Science: Part A: Polymer Chemistry, 2002, 40, 128-140.

Das erfindungsgemäße Copolymer enthält als Monomer Propen, wobei der Anteil des eingebauten 3-Methylbut-1-en von 1 bis 10 mol-% beträgt und die Schmelztemperatur von 90 bis 125 °C beträgt. Bevorzugt weist ein solches Copolymer eine Molmasse M_{w} von 6500 bis 8500 g/mol auf.

Die erfindungsgemäßen Copolymeren können zur Herstellung von Folien oder von geformten Körpern, insbesondere von spritzgegossenen oder extrudierten Formkörpern verwendet werden. Insbesondere können die erfindungsgemäßen Copolymeren in Form von Folien zur Herstellung von Kochbeuteln, Säcken, Beuteln oder Tragetaschen, als Hohlkörper wie z. B. als Gefäß, Flasche, Tube, Kanister, Fass oder Lagertank, oder als Spritzgussteil, wie z. B. als Flaschenkasten verwendet werden. Insbesondere die Propen/3-methybut-1-en-Copolymeren können, da sie häufig ölige bis klebrige Eigenschaften aufweisen, als Kleber oder Öle verwendet werden.

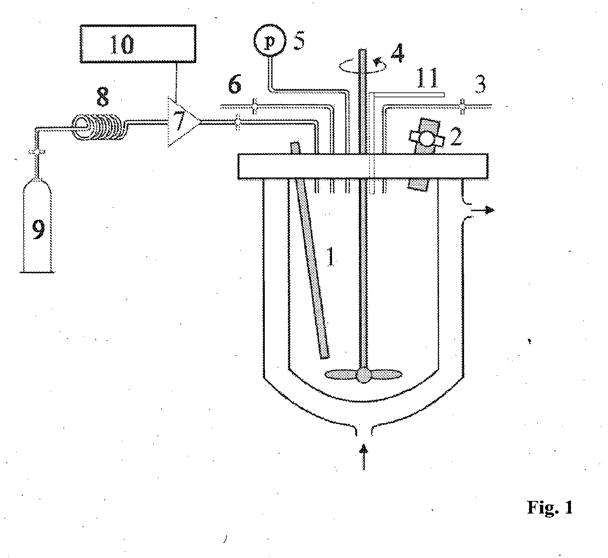

An Hand der Figuren Fig. 1 bis 3 wird die vorliegende Erfindung nachfolgend näher erläutert, ohne dass die Erfindung auf die dort beispielhaft abgebildeten Ausführungsarten beschränkt sein soll.

In Fig. 1 ist die in den Beispielen eingesetzte Polymerisationsapparatur schematisch dargestellt. Die Polymerisationsapparatur weist ein doppelwandiges Reäktionsgefäß auf, welches mit einer Thermometerhülse 1, einem Septum-gedichteten Kugelventil 2, einem Argon/Vakuum-Anschluss und einem Ablassventil 3, einem Rührer 4, einem Manometer 5, einer Toluolzufuhr 6, einem Massenflussregler **7**, Reinigungssäulen 8, einem Alkendruckgefäß 9, einem Kontrollsystem und einer Datenerfassung 10 sowie einer Verbindung zur angeschlossenen Gasflasche/ Lecture-Bottle mit dem 3-Methylbut-1-en 11 ausgestattet ist. Durch die Doppelwand kann ein Wärmeträger zum Heizen oder Kühlen des Inhalts des Reaktionsgefäßes geleitet werden.

In Fig. 2 sind die erhaltenen Werte zur Syndiotaxie für den Propen-Anteil der Propen/3-Methybut-1-en-Copolymere in Abhängigkeit vom Anteil des 3-Methylbut-1-ens im Ansatz für die Polymere, hergestellt mit [Me₂C(Cp)(Flu)]ZrCl₂]/ MAO gemäß Beispiel 1a aufgetragen.

In Fig. 3 ist ein ¹³C-NMR-Spektrum für Poly-(3-methylbut-1-en), hergestellt mit [Me₂C(Cp)(Flu)]ZrCl₂]/ MAO gemäß Beispiel 1a wiedergegeben.

Die folgenden Beispiele sollen das erfindungsgemäße Verfahren erläutern, ohne die Anwendungsbreite einzuschränken, die sich aus der Beschreibung und den Patentansprüchen ergibt.

### Beispiele zur Copolymerisation von 3-Methylbut-1-en (3MB1) mit Ethen (nicht erfindungsgemäß) und Propen

Die nachfolgend beschriebenen Copolymerisationen wurden halbkontinuierlich in einem 1 1-Glasautoklaven der Firma Büchi durchgeführt, in welchem bei Drücken bis zu 0,6 MPa gasdicht gearbeitet werden kann. Die Durchmischung erfolgt mittels eines durch Magnetkupplung indirekt angetriebenen Propellerrührers mit 500 U/ min. Der genaue Aufbau der Apparatur kann Fig. 1 entnommen werden. Die in Fig. 1 dargestellte Polymerisationsapparatur weist eine Thermometerhülse 1, ein septumgedichtetes Kugelventil 2, Argon/ Vakuum-Anschluss und Ablassventil 3, Rührer 4, Manometer 5, Toluolzufuhr 6, Massenflussregler 7, Reinigungssäulen 8, Alkendruckgefäß 9, Kontrollsystem und Datenerfassung 10 sowie ein Verbindung zur angeschlossenen Gasflasche/ Lecture-Bottle mit dem 3-Methylbut-1-en 11 auf.

### Durchführung der Copolymerisation

Vor jeder Copolymerisation wurde der Autoklav mindestens 1 h bei 95 °C unter Unterdruck (Ölpumpenvakuum) ausgeheizt und dabei mehrmals mit Argon gespült. Nach Einstellen der gewünschten Versuchstemperatur erfolgte die Befüllung mit 400 mg Methylalumoxan (MAO) und 200 ml Toluol. Das MAO wurde als Feststoff eingesetzt, der aus einer 10 Massen-%igen toluolischen Lösung (Firma Crompton) durch Filtration und anschließendes Abkondensieren des Lösungsmittels und des gegebenenfalls vorhandenen restlichen Trimethylaluminiums erhalten wurde. Anschließend wurde der Reaktor erneut unter Vakuum gesetzt. Dann wurde die Apparatur mit 3-Methylbut-1-en beaufschlagt. Über Gewichtskontrolle wurde die gewünschte Menge des 3-Methylbut-1-ens im Toluol gelöst, bevor wieder mit Argon der Normaldruck hergestellt wurde. Anschließend wurde mit dem gewünschten Alkendruck (Ethen- oder Propendruck) gesättigt. Der Alkendruck wurde dazu so eingestellt, dass kein weiteres Monomer nachströmte, d. h., dass bis zum Polymerisationsbeginn kein Monomerfluss mehr erfolgte. Die Polymerisation wurde durch Injizierung der toluolischen Katalysatorlösung mittels einer gasdichten Spritze durch Einspritzen durch das Septum gestartet. Bei der Propen/3-Methylbut-1-en-Copolymerisation wurden Drücke von 0,03 MPa oder 0,07 MPa und bei der Ethen/3-Methylbut-1-en-Copolymerisation Drücke von 0,025 bis 0,4 MPa eingestellt.

Vor Einsatz des 3-Methylbut-1-en, welches bei Aldrich bezogen wurde, wurde dieses gereinigt. Dazu wurde das 3-Methyl-1-buten zunächst in einen Dreihalskolben einkondensiert, mehrere Stunden (ca. 4 h) unter Eis-Wasser-Kühlung mit Triisobutylaluminium (TIBA) gerührt und anschließend in eine Lecture-Bottle einkondensiert.

Die Nachdosierung des Alkens während der Polymerisation erfolgte mittels eines Druckminderers, wobei der Alkenverbrauch über einen an einen Rechner angeschalteten Massenflussregler kontrolliert wurde. Da die Apparatur kein kontinuierliches Nachdosieren des Comonomers gestattete, wurden die Polymerisationsbedingungen so gehalten, dass der Umsatz an 3-Methylbuten nicht mehr als etwa 5 % betrug.

Der Polymerisationsabbruch erfolgte durch Unterbrechung der Alkenzufuhr, Zerstörung des Katalysators durch Einspritzen von Ethanol und Ablassen des Überdrucks. Die Reaktionslösung wurde anschließend in ein Becherglas überführt.

### Aufarbeitung der Polymere

Zum Herauslösen von Katalysatorresten wurde die Reaktionslösung über Nacht mit einer ethanolisch-wässrigen Salzsäurelösung, die konzentrierte Salzsäure, Ethanol und Wasser im Massenverhältnis von 1 zu 2 zu 7 aufwies, gerührt. Anschließend wurde -sowohl für die toluollöslichen als auch die toluolunlöslichen Polymere- mit einer 5 Massen- %-igen wässrigen Natriumhydrogencarbonat-Lösung neutralisiert und schließlich durch dreimaliges Waschen mit demineralisiertem Wasser neutral gewaschen. Toluolunlösliche Polymere wurden anschließend abfiltriert und mit Ethanol gewaschen. Im Falle von toluollöslichen Polymeren wurde am Rotationsverdampfer eingeengt auf etwa 50 ml und -wenn möglich- mit Ethanol gefällt. Anschließend wurde ebenfalls über einen Büchnertrichter abfiltriert und mit Ethanol gewaschen. Die Polymere wurden bis zur Massenkonstanz im Vakuumtrockenschrank bei 40 °C getrocknet.

### Beispiel 1: Copolymerisation von 3-Methylbut-1-en mit Propen

Für die Polymerisationsreihen mit Propen wurden die Katalysatoren [Me₂C(Cp)(Flu)]ZrCl₂ (Formel II) (Beispiel 1a) nicht erfindungsgemäß, und *rac*-[Me₂C(Ind)₂]ZrCl₂ (Formel III) (Beispiel 1b) eingesetzt. Diese Verbindungen können z. B. bei Boulder oder Aldrich bezogen werden. Der Katalysator der Formel II kann auch wie von J.A. Ewen, R.L. Jones, A. Razavi in J. Am. Chem. Soc., 1988, 110, 6255 oder wie in EP 0 354 391 beschrieben, hergestellt werden. Der Katalysator der Formel III kann auch wie von W. Spaleck, M. Antberg, V. Dolle, R. Klein, J. Rohrmann und A. Winter in New. J. Chem., 14, 6 (1990) 499 beschrieben hergestellt werden. Die Reaktionsbedingungen, unter denen die Konzentrationsreihen und Temperaturreihen in den Beispielen l a und 1b durchgeführt wurden, können Tabelle 1 entnommen werden.

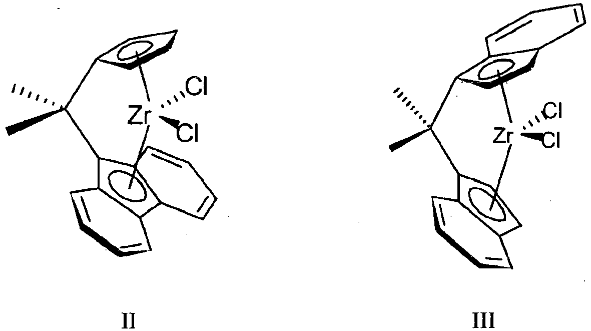

**Tabelle 1: Reaktionsbedingungen der Propen/3-Methylbut-1-en-Copolimerisationen und der 3-Methylbut-1-en-Copolymerisationen.**

| | Konzentrationsreihe | Temperaturreihe |
|---|---|---|
| Temperaturen | 30 °C | 15, 30, 45, 60 °C |
| Dauer | 1h (3MB1-Homopolymerisation: 6 h) | 1 h |
| Molenbruch 3MB1 im Ansatz (X_{3MB1}) | 0,00; 0,20; 0,40; 0,60; 0,80; 1,00 | 0,80 |
| Druck Propen | 0,07 MPa (bei X_{3MB1}=0,80: 0,035 MPa) | 0,03 MPa |
| Menge 3MB1 | 0 bis 10,66 g | 4,94 bis 13,66 g |
| Gesamtkonzentration | 0,4 bis 1 mol/L | 0,60 bis 1,22 mol/L |
| Toluol | 200 mL | 200 mL |
| MAO | 400 mg | 400 mg |
| Katalysator | 2·10⁻³ mmol (3MB1-Homopolymerisation: 1·10⁻² mmol) | 2·10⁻³ mmol |

### Beispiel 1a: Copolymerisation in Gegenwart von [Me₂C(Cp)(Flu)]ZrCl₂ als Katalysator (nicht erfindungsgemäß)

In den nachfolgenden Tabellen 2 und 3 sind die Ergebnisse der Copolymerisation von 3-Methylbut-1-en mit Propen in Gegenwart von [Me₂C(Cp)(Flu)]ZrCl₂ als Katalysator angegeben.

**Tabelle 2: Übersicht über die Polymerisationsergebnisse mit dem Katalysator [Me₂C(Cp)(Flu)]ZrCl₂ für die Konzentrationsreihe bei einer Polymerisationstemperatur von 30 °C.**

| Anteil 3-Methyl-buten im Ansatz | Aktivität [kg_{Polymer}/ (mol_{Kat}·h·mol_{Monomer}·L⁻¹)] | Einbau 3-Methylbut-1-en [mol-%] | Schmelztemperatur Tₘ₁/Tₘ₂ [°C]/ Glasübergangstemperatur [°C] | Molmasse M_{w} [g/mol] |
|---|---|---|---|---|
| 0,00 | 2019 | 0 | 122,2/ 133,3/ 0,7 | 66100 |
| 0,20 | 1976 | <0,5 | 123,8/ 134,5/ 1,4 | 77950 |
| 0,40 | 1114 | <0,5 | 120,5/ 132,0/ -0,7 | 68250 |
| 0,60 | 318 | <1 | 119,0/ 131,2/ -2,0 | 65400 |
| 0,80 | 73 | <1 | 102,0/ 116,2/ -5,0 | 51200 |
| 1,00 | 2 | 100 | - | - |

| | | | | |
|---|---|---|---|---|
| M_{w}= Gewichtsmittel der Molmasse | | | | |

**Tabelle 3: Übersicht über die Polymerisationsergebnisse mit dem Katalysator [Me₂C(Cp)(Flu)]ZrCl₂ für die Temperaturreihe bei X_{3MB1}=0,80.**

| Polymerisations-temperatur [°C] | Aktivität [kg_{Polymer}/ (mol_{Kat}·h·mol_{Monomer}·L⁻¹)] | Einbau 3-Methylbuten [mol-%] | Schmelztemperatur Tₘ₁/Tₘ₂ [°C]/ Glasübergangstemperatur [°C] | Molmasse M_{w} [g/mol] |
|---|---|---|---|---|
| 15 | 49 | <1 | 128,5/ 117,2/ -1,1 | 68000 |
| 30 | 156 | <1 | 118,6/ 105,0/ -0,8 | 59600 |
| 45 | 158 | <1 | 97,5/ -1,5 | 39700 |
| 60 | 68 | <1 | 96,8/ -0,5 | 23000 |

Die in den Tabellen 2 und 3 angegebenen zweiten Schmelztemperaturen sind vermutlich auf Rekristallisationsprozesse während der Messung zurückzuführen.

Wie der Tabelle 2 entnommen werden kann, ist mit zunehmendem Anteil an 3-Methylbut-1-en im Ansatz ein deutlicher Rückgang der Aktivität von etwa 2000 kg/(mol_{Kat}·h·mol_{Monomer}·L⁻¹) bei der reinen Propenpolymerisation auf etwa 73 kg/(mol_{Kat}·h·mol_{Monomer}·L⁻¹) bei X_{3MB1}= 0,80 festzustellen. Die Homopolymerisation von 3-Methylbut-1-en läuft mit einer geringen Aktivität von 2 kg/(mol_{Kat}·h·mol_{Monomer}·L⁻¹) ab (die Angabe mol_{Monomer}·L⁻¹ steht für die Konzentration c_{Monomer}).
Wie Tabelle 3 entnommen werden kann, ergibt sich für die Polymerisationstemperatur ein Aktivitätsmaximum zwischen 30 und 45 °C.

Beiden Tabellen kann entnommen werden, dass mit zunehmendem Anteil an 3-Methylbut-1-en im Ansatz ein Rückgang des Gewichtsmittels der Molmasse M_{w} zu beobachten ist. Ebenso sinkt die Molmasse M_{w} mit steigender Polymerisationstemperatur, wobei hier der Einfluss besonders stark ist, da M_{w} von 68.000 g/mol bei einer Polymerisationstemperatur von 15 °C auf etwa ein Drittel (23.000 g/mol) bei einer Polymerisationstemperatur von 60 °C abfällt. Dies könnte z. B. am vermehrten Auftreten von Abbruchreaktionen liegen. Die Bestimmung der Molmassen der Copolymeren und des Polypropylens erfolgte wie oben beschrieben mittels Gelpermeationschromatographie.

Die thermischen Eigenschaften wurden mittels DSC (Differential Scanning Calorimetry) bestimmt. Dazu wurde eine Probe von 7 bis 12 mg des Copolymeren in einem Differenzialcalorimeter vom Typ Mettler Toledo DSC 821^{e} mit einer Aufheizrate von 20 °C/min in einem Bereich von -100 bis +200 °C vermessen. Von den durch zweimaliges Aufheizen erhaltenen Daten wurden die des zweiten Aufheizens verwendet. Im Fall von Glasübergängen wurden die Proben nochmals mit einer langsameren Aufheizrate (10 °C/min) vermessen. Die bei der Aufnahme der Kurve erhaltenen Peaks wurden elektronisch mit dem Programm STARe 8.01 der Firma Mettler Toledo ausgewertet. Auffällig bei den Ergebnissen, der DSC-Untersuchungen war das Auftreten nicht nur eines Schmelzpeaks für ein Polymer, sondern es waren bei den erhaltenen Polymeren häufig zwei ineinanderlaufende Schmelzpeaks festzustellen. Dieses aus der Literatur für syndiotaktisches Polypropylen bekannte Phänomen lässt sich auf einen Rekristallisationsprozess zurückführen (vgl. Graef et al., Journal of Polymer Science: Part A: Polymer Chemistry, 2002, 40, 128-140; De Rosa et al., Macromolecules, 1998, 31, 6206-6210).

Zudem lassen sich neben den Schmelzpeaks schwach ausgeprägte Glasübergänge detektieren, die auf das Vorhandensein amorpher Bereiche hindeuten. Für unterschiedliche Anteile 3-Methylbut-1-en im Ansatz ließ sich ein leichtes Absinken der Glasübergangstemperaturen bei den erhaltenen Polymeren sowie ein deutlicheres Absinken der Schmelztemperaturen feststellen. Mit steigender Polymerisationstemperatur und sinkender Molmasse wurde ein deutlicher Rückgang der Schmelztemperatur beobachtet.

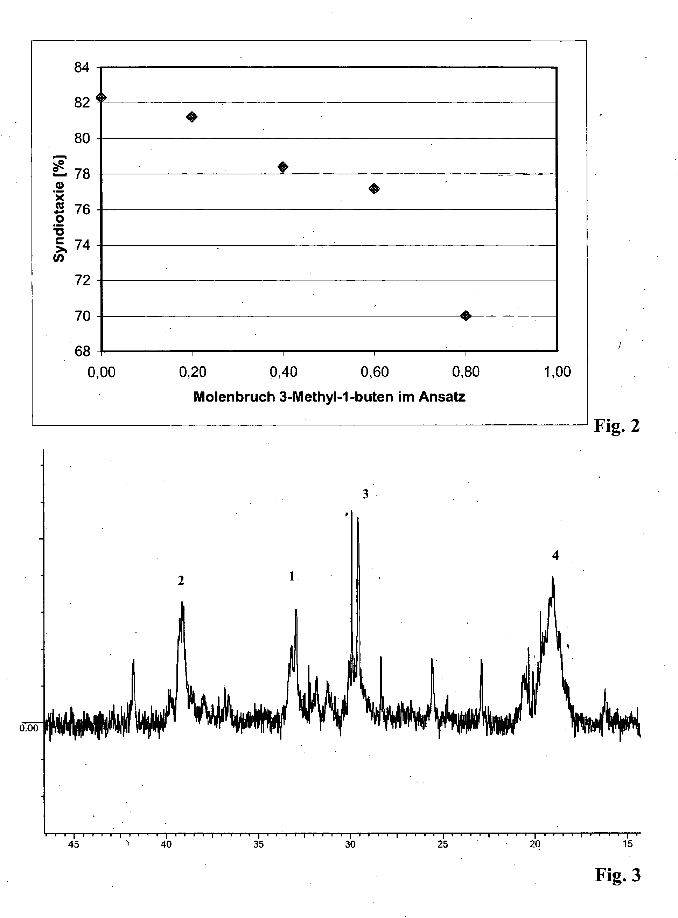

Mit zunehmendem Anteil von 3-Methylbut-1-en im Ansatz sinkt der Anteil syndiotaktischer Pentaden deutlich: Beträgt er noch 82 % bei der reinen Propenpolymerisation, so sinkt er auf ca. 70 % bei 80 mol-% Anteil des 3-Methylbut-1-ens im Ansatz (Fig. 2). Die Bestimmung erfolgte mittels ¹³C-NMR-Spektroskopie. Dabei wurde von der Annahme ausgegangen, dass es keine Signale im Methylbereich des Propens durch das Comonomer gibt.

Obschon in den ¹³C-NMR-Spektren keine Signale, die sich auf eingebautes 3-Methylbut-1-en zurückführen lassen, detektiert werden konnten, muss bereits aufgrund der absinkenden Molmassen und Schmelztemperaturen mit steigendem Anteil 3-Methylbut-1-en im Ansatz darauf geschlossen werden, dass nicht bloß "reines" Polypropylen, sondern durchaus Propen/3-Methylbut-1-en-Copolymere mit wenn auch nur geringem Einbau hergestellt wurden, und dass die entsprechenden Signale im NMR-Spektrum im Rauschen untergehen.

Die Homopolymerisation von 3-Methylbut-1-en war hingegen gelungen. Ein entsprechendes ¹³C-NMR-Spektrum von Poly-(3-methylbut-1-en) zeigt Fig. 3. In dieser Fig. 3 ist ein ¹³C-NMR-Spektrum für Poly-(3-methylbut-1-en), hergestellt mit [Me₂C(Cp)(Flu)]ZrCl₂]/ MAO wiedergegeben. Die Zahlen geben an welcher Peak welchem Kohlenstoffatom im Poly-(3-melhylbut-1-en) (Formel **V)** zuzuordnen ist.

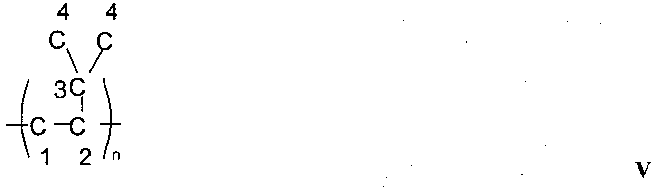

Die Zuordnung der Signale für Poly-(3-Methylbut-1-en) erfolgte anhand einer Veröffentlichung (A. Borriello, V. Busico, R. Cipullo, Macromol. Rapid Commun., 1996, 17, 589-597) und eines Patents (T. Asabuma, Y. Tamai, Jpn. Kokai Tokkyo Koho (1991), JP 03200812 A2), wobei das Spektrum in dieser Schrift allerdings stark vereinfacht ist.
Ein Nachweis für den Einbau von 3-Methylbut-1-en im Polymer konnte mittels Pyro-GC-MS erbracht werden. Dabei wird das Polymer pyrolisiert, die Bruchstücke werden gaschromatographisch getrennt und mit einem Massenspektrometer analysiert. Über jeweils einen charakteristischen Peak für beide Homopolymere und aus deren Verhältnis in den Copolymer-Chromatogrammen lassen sich - anhand der Peakverhältnisse und der über ¹³C-NMR-Spektroskopie ermittelten Einbauten für die mit *rac*-[Me₂C(Ind)₂]ZrCl₂ hergestellten Copolymere- Rückschlüsse auf die Menge des eingebauten Comonomers ziehen. Demnach wurden Propen/3-Methylbut-1-en-Copolymere erhalten, allerdings ist der Einbau mit Abschätzungsweise weit unter einem Prozent sogar für das bei X_{3MB1} = 0,80 erhaltene Copolymere äußerst gering.

### Beispiel 1b: Copolymerisation in Gegenwart von rac-[Me₂C(Ind)₂]ZrCl₂ als Katalysator

In den nachfolgenden Tabellen 4 und 5 sind die Ergebnisse der Copolymerisation von 3-Methylbut-1-en mit Propen in Gegenwart von *rac*-[Me₂C(Ind)₂]ZrCl₂ als Katalysator angegeben.

**Tabelle 4: Übersicht über die Polymerisationsergebnisse mit dem Katalysator rac-[Me₂C(Ind)₂]ZrCl₂ für die Konzentrationsreihe bei einer Polymerisationstemperatur von 30 °C.**

| Anteil 3-Methyl-buten im Ansatz | Aktivität [kg_{Polymer}/ (mol_{Kat}·h·mol_{Monomer}·L⁻¹)] | Einbau 3-Methylbuten [mol-%] | Schmelztemperatur [°C]/ Glasübergangstemperatur [°C] | Molmasse M_{w} [g/mol] |
|---|---|---|---|---|
| 0,00 | 4088 | 0,0 | 133,9 | 9300 |
| 0,20 | 4230 | 0,0 | 130,3 | 8200 |
| 0,40 | 3376 | 1,0 | 125,1 | 8100 |
| 0,60 | 1967 | 3,5 | 116,9/ -10,2 | 7550 |
| 0,80 | 1103 | 8,9 | 88,5/ -12,5 | 6800 |
| 1,00 | 15 | 100 | 295,2 | 9300 |

**Tabelle 5: Übersicht über die Polymerisationsergebnisse mit dem Katalysator rac-[Me₂C(Ind)₂]ZrCl₂ für die Temperaturreihe bei X_{3MB1} =0,80.**

| Polymerisationstemperatur [°C] | Aktivität [kg_{Polymer}/ (mol_{Kat}·h·mol_{Monomer}·L⁻¹)] | Einbau 3-Methylbuten [mol-%] | Schmelz-temperatur [°C]/ Glasübergangstemperatur [°C] | Molmasse M_{w} [g/mol] |
|---|---|---|---|---|
| 15 | 517 | 8,5 | 88,5/ -13,2 | 14500 |
| 30 | 843 | 9,3 | 91,1/ -9,8 | 8200 |
| 45 | 1534 | 10,0 | 89,4/ -10,2 | 7500 |
| 60 | 2283 | 9,1 | 66,3/ -17,5 | 8700 |

Wie der Tabelle 4 entnommen werden kann, wurde auch hier mit zunehmendem Anteil des 3-Methylbut-1-ens im Ansatz ein deutliches Absinken der Aktivität festgestellt, obgleich die Aktivitäten insgesamt höher als für den Katalysator [Me₂C(Cp)(Flu)]ZrCl₂ waren. Besonders auffällig ist die noch vergleichsweise hohe Aktivität von etwa 1100 kg/(mol_{Kat}·h·mol_{Monomer}·L⁻¹) bei X_{3MB1} = 0,80, welche etwa dem fünfzehnfachen Wert der für den C_{S}-symmetrischen Katalysator [Me₂C(Cp)(Flu)]ZrCl₂ gefundenen Aktivität entspricht. Im untersuchten Temperaturbereich von 15 bis 60 °C war eine mit steigender Polymerisationstemperatur ansteigende Aktivität zu beobachten. Von 15 °C mit einer Aktivität von ungefähr 500 kg/(mol_{Kat}·h·mol_{Monomer}·L⁻¹) bei X_{3MB1} 0,80 erfährt sie bis 60 °C mit etwa 2300 kg/(mol_{Kat}·h·mol_{Monomer}·L⁻¹) nahezu eine Verfünffachung. Auch mit diesem Katalysator ist die Homopolymerisation von 3-Methylbut-1-en gelungen, sogar mit einer leicht höheren Aktivität von 15 kg/(mol_{Kat}·h·mol_{Monomer}·L⁻¹).

Die Molmassen liegen für alle Anteile von 3-Methylbut-1-en im Ansatz unter 10.000 g/mol und sind damit relativ niedrig. Mit zunehmendem Molenbruch des 3-Methylbut-1-ens im Ansatz lässt sich ein leichtes Absinken der Molmassen feststellen. Eine Bestimmung der Molmasse des Poly-(3-Methylbut-1-ens) mittels GPC oder Viskosimetrie war aufgrund der Unlöslichkeit des Polymers in diversen Lösungsmitteln auch bei starkem Erwärmen nicht möglich. Die Bestimmung der Molmassen der Copolymeren und des Polypropylens erfolgte wie oben beschrieben mittels Gelpermeationschromatographie.
Die Schmelztemperaturen sanken um 45 °C von etwa 134 °C für das reine Polypropylen auf etwa 89 °C für X_{3MB1} = 0,80 proportional mit dem steigenden Anteil des 3-Methylbut-1-ens im Polymer, was gleichzeitig mit einer Abnahme der Molmassen verbunden war. Zu bemerken war weiterhin, dass die Copolymere ab einem Comonomereinbau von etwa 3,5 % neben dem Schmelzpeak Glasübergänge zeigen.

Die Taktizität liegt für die erhaltenen Copolymere im Bereich von ca. 70 bis 90 % (Isotaxie), d.h. dass die Isotaxie mit steigendem Anteil von 3-Methylbut-1-en im Polymer sinkt. Die Bestimmung der Taktizität erfolgte aus den Pentaden in der Methyl-Region (im Bereich von ca. 19,5 bis 22,5 ppm) im ¹³C-NMR-Spektrum.

Zur Bestimmung des Einbaus war es zunächst notwendig, die Signale aus dem ¹³C-NMR-Spektrum unter Berücksichtigung des DEPT-Experimentes (Distortionsless Enhancement by Polarization Transfer) zuzuordnen. Der Einbau wurde über das Signal für den Kettenverzweigungspunkt der Isopropylgruppe relativ zum Signal des CH-Verzweigungspunktes vom Propenanteil bestimmt. Die Bestimmung erfolgte mittels der Software ACD SpecView (Version 3.50) per Hand über eine Peak-Integration. In dem untersuchten Bereich wurde ein Comonomereinbau von bis zu etwa 9 mol-% erzielt. Für verschiedene Polymerisationstemperaturen wurden unterschiedliche Anteile an eingebautem Comonomer gefunden. Im untersuchten Bereich schwankte der Comonomeranteil im Polymer zwischen 8,5 und 10 mol-%.

Den vorangegangenen Beispielen kann entnommen werden, dass eine Copolymerisation von Propen mit 3-Methylbut-1-en möglich ist. Mit dem C_{S}-symmetrischen Katalysator [Me₂C(Cp)(Flu)]ZrCl₂ konnten, obwohl eine Homopolymerisation des 3-Methylbut-1-ens mit diesem Katalysator mit geringer Aktivität möglich ist, nur Copolymere mit äußerst geringem Einbau, wenn auch merklichem Einfluss auf die Polymereigenschaften, hergestellt werden.

Während hier die Syndiotaxie mit steigendem Anteil des 3-Methylbut-1-ens im Ansatz deutlich abnimmt, bewegt sich die Isotaxie der mit *rac*-[Me₂C(Ind)₂]ZrCl₂ synthetisierten Polymere im Bereich von 90 bis 70 %, wobei die Isotaxie mit steigendem Anteil an 3-Methylbut-1-en im Ansatz sinkt. Mit diesem Katalysator konnten auch deutlich höhere Einbauraten erzielt werden, welche sich besonders auf die Schmelztemperatur stark auswirken.

### Beispiel 2: Copolymerisation von 3-Methylbut-1-en mit Ethen (nicht erfindungsgemäß)

In den Beispielen 2a bis 2c wurden unter Verwendung von drei unterschiedlichen Katalysatoren eine Reihe von Versuchen 2a bis 2c durchgeführt, bei denen der Anteil an 3-Methylbut-1-en variiert wurde. Die Reaktionsbedingungen für die Beispiele 2a bis 2c können Tabelle 6 entnommen werden.

**Tabelle 6: Reaktionsbedingungen der Ethen/3-Methylbut-1-en-Copolymerisationen.**

| | Versuch 2a, 2b und 2c: Konzentrationsreihe |
|---|---|
| Temperaturen | 60 °C |
| Dauer | 45 min, außer für X_{3MB} = 0 oder 0,4 12 min und für X_{3MB} = 1 5,5 h |
| Molenbruch 3MB1 im Ansatz (X_{3MB1}) | 0,00; 0,40; 0,60; 0,80; 0,9; 0,95; 0,98 |
| Druck Ethen | 0,025 bis 0,4 MPa (bei X_{3MB1}=0,80: 0,035 MPa) |
| Menge 3MB 1 | 0 bis 14,08 g |
| Gesamtkonzentration | 0,3 bis 1,02 mol/L |
| Toluol | 200 mL |
| MAO | 400 mg (6,90 mmol) |
| Katalysator | 7,5×10⁻⁵ mmol (für X_{3MB}= 0 und 0,4) |
| | 1,0×10⁻⁴ mmol (X_{3MB}= 0,6, 0,8, 0,9, 0,95 und 1) |
| | 3,75×10⁻⁴ mmol (X_{3MB}= 0,98) |

### Beispiel 2a: Copolymerisation mit Katalysator [Me₂Si(Me₄Cp)(N^{tert}Bu)]TiCl₂ (nicht erfindungsgemäß)

Für die Polymerisationsreihen mit Ethen wurde der Katalysator [Me₂Si(Me₄Cp)(N^{tert}Bu)TiCl₂ (Formel IV) eingesetzt. Die Bedingungen, bei denen die Versuche 2a durchgeführt wurden, können Tabelle 6 entnommen werden. Der Katalysator gemäß Formel IV kann z. B. wie von J.

Okuda in Chem. Ber. 1990, 123, 1649 beschrieben oder wie von F. Amor und J. Okuda in J. Organomet. Chem. 1996, 520, 245 beschrieben oder wie in EP 0 416 815 oder US 5,026,798 beschrieben, hergestellt werden. Die für die Versuchsreihe 2a ermittelten Ergebnisse können der nachfolgenden Tabelle 7 entnommen werden.

**Tabelle 7: Übersicht über die Polymerisationsergebnisse mit dem Katalysator [Me₂Si(Me₄Cp)(N^{tert}Bu)]TiCl₂ in der Versuchsreihe 2a.**

| Molenbruch 3-Methyl-buten im Ansatz | Aktivität [kg_{Polymer}/ (mol_{Ti}·h·mol_{Monomer}·L⁻¹)] | Einbau 3-Methylbuten [mol-%] | Schmelztemperatur [°C] | Molmasse Mₙ [g/mol] | Molmasse M_{w} [g/mol] | PD |
|---|---|---|---|---|---|---|
| 0,00 | 154400 | 0 | 138,9 | 393200 | 576800 | 1,5 |
| 0,40 | 148600 | 0,6 | 126,0 | 217400 | 482500 | 2,2 |
| 0,60 | 143200 | 0,9 | 119,7 | 146000 | 315600 | 2,2 |
| 0,80 | 60300 | 2,3 | 109,6 | 44300 | 87000 | 2,0 |
| 0,90 | 16700 | 4,2 | 96,5 | 20300 | 38100 | 1,9 |
| 0,95 | 6900 | 9,7 | 47,0 | 5500 | 9500 | 1,7 |
| 0,98 | 1400 | 17,3 | T_{G}-56,8 | 2300 | 2900 | 1,3 |

| | | | | | | |
|---|---|---|---|---|---|---|
| T_{G} = Glasübergangstemperatur PD = Polydispersität Mₙ = Zahlenmittel der Molmasse | | | | | | |

Wie der Tabelle 7 entnommen werden kann, zeigte die Copolymerisationen eine starke Abhängigkeit der Katalysatoraktivität von dem Anteil an 3-Methylbuten im Ansatz. Aufgrund des starken Absinkens der Aktivität mit steigendem Anteil an 3-Methylbuten im Ansatz blieb der Versuch der 3-Methylbuten-Homopolymerisation erfolglos.

Das Einbauverhalten des gewählten Katalysators für das 3-Methylbut-1-en ist relativ stark abhängig von dem Anteil des 3-Methylbut-1-ens im Ansatz. Bei niedrigen bis mittleren Anteilen 3-Methylbut-1-en im Ansatz erfolgte nahezu kein Einbau. Bei 98 mol-% 3-Methylbut-1-en im Ansatz ließ sich jedoch ein Einbau von 17,3 mol-% 3-Methylbut-1-en im Copolymer erzielen. Mit zunehmendem Einbau des 3-Methylbutens konnte ein Sinken der Schmelztemperaturen festgestellt werden. Es wurde bis zu einem Einbau von etwa 4 mol-% 3-methylbut-1-en ein linear low density Polyethylen (LLDPE) erhalten (Die Schmelztemperatur von LLDPE liegt üblicherweise im Bereich zwischen etwa 100 und 130 °C). Bei einem Einbau von 4,2 und 4,6 mol-% wurde ein ultra low density Polyethylen (ULDPE) erhalten (Die Schmelztemperatur von ULDPE liegt typischerweise etwa im Bereich von 90 bis 100 °C). Das Copolymer mit einem Comonomereinbau von 17,3 mol-% war bereits bei Raumtemperatur vollkommen amorph.

Die Molmassen nahmen um zwei Zehnerpotenzen mit zunehmendem Einbau des 3-Methylbut-1-ens ab, so dass ein Copolymer mit einem Gehalt an 3-Methylbuten von 18 mol-% bereits als nahezu oligomere Verbindung bezeichnet werden kann.

Mit dem verwendeten Katalysator konnten Ethen/3-Methylbuten-Copolymere hergestellt werden.

### Beispiel 2b: Copolymerisation mit Katalysator [Ph₂Si(OctHFlu)(Ind)]ZrCl₂ (nicht erfindungsgemäß)

Für die Polymerisationsreihen mit Ethen wurde der Katalysator [Ph₂Si(OctHFlu)(Ind)]ZrCl₂ (Formel V) eingesetzt. Die Bedingungen, bei denen die Versuche 2b durchgeführt wurden können Tabelle 6 entnommen werden. Die im Versuch 2b ermittelten Ergebnisse können der nachfolgenden Tabelle 8 entnommen werden.

**Tabelle 8: Übersicht über die Polymerisationsergebnisse mit dem Katalysator [Ph₂Si(OctHFlu)(Ind)]ZrCl₂ der Versuchsreihe 2b.**

| Molenbruch 3-Methyl-buten im Ansatz | Aktivität [kg_{Polymer}/ (mol_{Zr}·h·mol_{Monomer}·L⁻¹)] | Einbau 3-Methylbuten [mol-%] | Schmelztemperatur [°C] | Molmasse Mₙ [g/mol] | Molmasse M_{w} [g/mol] | PD |
|---|---|---|---|---|---|---|
| 0,00 | 108700 | 0 | 140,0 | 791800 | 2174800 | 2,7 |
| 0,20 | 145900 | 0,5 | 127,7 | 475900 | 1177700 | 2,5 |
| 0,40 | 45300 | 1,0 | 122,7 | 200800 | 499000 | 2,5 |
| 0,60 | 42200 | 2,3 | 109,0 | 191300 | 394800 | 2,1 |
| 0,80 | 15000 | 5,3 | 92,7 | 201600 | 420200 | 2,1 |
| 0,90 | 3800 | 9,7 | 63,7/(121,5) | 94800 | 197900 | 2,1 |
| 0,95 | 2000 | 13,2 | 44,9/(119,5) | 60000 | 119700 | 2,0 |
| 0,98 | 700 | 19,1 | T_{G}-48,5 | 45900 | 84100 | 1,8 |

| | | | | | | |
|---|---|---|---|---|---|---|
| T_{G} = Glasübergangstemperatur. Bei den bei der Schmelztemperatur in Klammern angegebenen Werten handelt es sich um kleine zusätzliche Schmelzpeaks. PD = Polydispersität Mₙ = Zahlenmittel der Molmasse | | | | | | |

Wie der Tabelle 8 entnommen werden kann, zeigte die Copolymerisationen eine starke Abhängigkeit der Katalysatoraktivität von dem Anteil an 3-Methylbuten im Ansatz. Aufgrund des starken Absinkens der Aktivität mit steigendem Anteil an 3-Methylbuten im Ansatz blieb der Versuch der 3-Methylbuten-Homopolymerisation erfolglos.

Das Einbauverhalten des gewählten Katalysators für das 3-Methylbut-1-en ist relativ stark abhängig von dem Anteil des 3-Methylbut-1-ens im Ansatz. Bei niedrigen bis mittleren Anteilen 3-Methylbut-1-en im Ansatz erfolgte ein relativ geringer Einbau. Bei 98 mol-% 3-Methylbut-1-en im Ansatz ließ sich ein Einbau von 19,1 mol-% 3-Methylbut-1-en im Copolymer erzielen.

Mit zunehmendem Einbau des 3-Methylbutens konnte ein Sinken der Schmelztemperaturen festgestellt werden. Die Molmassen nahmen um zwei Zehnerpotenzen mit zunehmendem Einbau des 3-Methylbut-1-ens ab. Generell sind bei den Versuchen gemäß Beispiel 2b Copolymere mit größeren Molmassen als in Beispiel 2a erhalten worden. Es konnte gezeigt werden, dass mit dem verwendeten Katalysator Ethen/3-Methylbuten-Copolymere hergestellt werden können.

### Beispiel 2c: Copolymerisation mit Katalysator rac-[Me₂C(Ind)₂]ZrCl₂ (nicht erfindungsgemäß)

Für die Polymerisationsreihen mit Ethen wurde der Katalysator *rac*-[Me₂C(Ind)₂]ZrCl₂ (Formel III) eingesetzt. Die Bedingungen, bei denen die Versuche 2c durchgeführt wurden können Tabelle 6 entnommen werden. Die für die Versuchsreihe 2c ermittelten Ergebnisse können der nachfolgenden Tabelle 9 entnommen werden.

**Tabelle 9: Übersicht über die Polymerisationsergebnisse mit dem Katalysator rac-[Me₂C(Ind)₂]ZrCl₂ in der Versuchsreihe 2c.**

| Molenbruch 3-Methyl-buten im Ansatz | Aktivität [kg_{Polymer}/ (mol_{Zr}·h·mol_{Monomer}·L⁻¹)] | Einbau 3-Methylbuten [mol-%] | Schmelz-temperatur [°C] | Molmasse Mₙ [g/mol] | Molmasse M_{w} [g/mol] | PD |
|---|---|---|---|---|---|---|
| 0,00 | 228800 | 0,0 | 131,9 | 19800 | 38500 | 1,9 |
| 0,20 | 290200 | 0,2 | 123,1 | 23800 | 44400 | 1,9 |
| 0,40 | 256000 | 2,4 | 113,9 | 17400 | 28900 | 1,7 |
| 0,60 | 187500 | 4,3 | 98,6/(125, 0) | 18600 | 31400 | 1,7 |
| 0,80 | 79400 | 11,3 | 64,7/(126, 8) | 18800 | 34000 | 1,8 |
| 0,90 | 30200 | 19,4 | T_{G}-48,9 | 15500 | 28100 | 1,8 |
| 0,95 | 20500 | 30,3 | T_{G}-40,0 | 13700 | 26000 | 1,9 |
| 0,98 | 6300 | 36,8 | T_{G}-26,3 | 14400 | 25800 | 1,8 |

| | | | | | | |
|---|---|---|---|---|---|---|
| T_{G} = Glasübergangstemperatur. Bei den bei der Schmelztemperatur in Klammern angegebenen Werten handelt es sich um kleine zusätzliche Schmelzpeaks. PD = Polydispersität Mₙ = Zahlenmittel der Molmasse | | | | | | |

Wie der Tabelle 9 entnommen werden kann, zeigte auch bei diesem Versuch die Copolymerisationen eine starke Abhängigkeit der Katalysatoraktivität von dem Anteil an 3-Methylbuten im Ansatz.

Das Einbauverhalten des gewählten Katalysators für das 3-Methylbut-1-en ist relativ stark abhängig von dem Anteil des 3-Methylbut-1-ens im Ansatz. Im Gegensatz zu den Versuchen gemäß den Beispielen 2a und 2b zeigt sich bei der Versuchsreihe 2c, dass ein Einbau eines zweistelligen %-Anteils an 3-Methylbut-1-en bereits bei einem Anteil an 80 mol-% im Ansatz erreicht wird. Bei 98 mol-% 3-Methylbut-1-en im Ansatz wurde sogar ein Einbau von 36,8 % erzielt.

Im Gegensatz zu den Beispielen 2a und 2b bewegten sich die Molmassen der in Beispiel 2c erhaltenen Copolymere in einer relativ geringen Bandbreite.

Die Polydispersität liegt für die erhaltenen Copolymeren bei ca. 2. Die bei der Ziegler-Natta-Katalyse erhaltenen Copolymere weisen dagegen deutlich höhere Werte für die Polydispersität auf. Die zur Bestimmung der Polydispersität benötigten Werte Mₙ (Zahlenmittel des Molekulargewichts) und M_{w} (Gewichtsmittel des Molekulargewichts) wurden mittels GPC ermittelt.

Eine geringere Polydispersität ist gleichbedeutend mit einer engeren Molmassenverteilung. Mit dem erfindungsgemäßen Verfahren sind deshalb Copolymere erhältlich, die eine enge Molmassenverteilung aufweisen. Vorzugsweise weisen erfindungsgemäße Ethen-Copolymere eine Polydisperisität zwischen 1,2 und 2,8, bevorzugt zwischen 1,6 und 2 auf.

## Patentansprüche

1. Verfahren zur Herstellung von Copolymeren auf Basis von Propen als Monomer und 3-Methybut-1-en als Comonomer, wobei der Anteil des 3-Methylbut-1-en im Copolymer von 0,1 bis 40 mol-% beträgt,
**dadurch gekennzeichnet,**
**dass** die Copolymerisation in Gegenwart eines Katalysators **Ia** der Formel Z(Cp*)(Y)M(X)ₘ 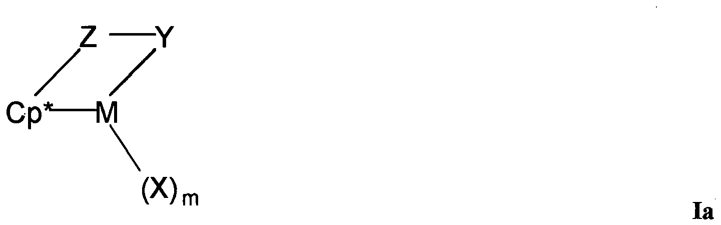 mit Cp* = Indenyl-Gruppe,
Y = Gruppe vom Cyclopentadienyl-Typ, ausgewählt aus substituierten oder unsubstituierten Cyclopentadienyl-, Indenyl-, Tetrahydroindenyl-, Octahydrofluorenyl- und Fluorenyl-Gruppen, oder anionische Ligandengruppe enthaltend Stickstoff, Phosphor, Sauerstoff oder Schwefel und bis zu 20 Atome, die kein Wasserstoff sind, wobei Cp* und Y kovalent oder über eine Gruppe Z miteinander verknüpft sein können,
M ausgewählt ist aus Zr, Ti oder Hf,
X = jeweils unabhängig ein Halogenatom, ein Pseudohalogen, ein Wasserstoffatom, eine Silyl-Gruppe, ein Phosphid, ein Sulfid oder ein organischer Rest und
m = eine Zahl, die genügt um mit den X die Valenzen von M abzusättigen, und
einer Aluminium oder Bor aufweisende Verbindung als Cokatalysators durchgeführt wird, und Z eine CR²R³- oder eine SiR²R³-Gruppe mit R² und R³ gleich oder unterschiedlich Wasserstoff oder ein aromatischer oder aliphatischer Rest ist.

2. Verfahren nach Anspruch 1,
**dadurch gekennzeichnet,**
**dass** als Aluminium aufweisende Verbindung Methylalumoxan (MAO) eingesetzt wird.

3. Verfahren nach zumindest einem der Ansprüche 1 bis 2,
**dadurch gekennzeichnet,**
**dass** die Copolymerisation bei einem Molverhältnis von Metall des Katalysators gemäß Formel **Ia** zu Aluminium oder Bor des Cokatalysators von 1 zu 0,1 bis 1 zu 100.000 durchgeführt wird.

4. Verfahren nach zumindest einem der Ansprüche 1 bis 3,
**dadurch gekennzeichnet,**
**dass** die Copolymerisation in einem Lösungsmittel, ausgewählt aus Butan, Hexan, Heptan, Toluol, Xylol und Ethylbenzol durchgeführt wird.

5. Verfahren nach zumindest einem der Ansprüche 1 bis 4,
**dadurch gekennzeichnet,**
**dass** die Copolymerisation bei einem Druck von 0,1 bis 1 MPa durchgeführt wird.

6. Verfahren nach zumindest einem der Ansprüche 1 bis 5,
**dadurch gekennzeichnet,**
**dass** der molare Anteil an 3-Methylbut-1-en Monomer im Reaktionsgemisch an der Summe der Monomeren von 3-Methylbut-1-en und Propen zumindest 20 % beträgt.

7. Verfahren nach Anspruch 6,
**dadurch gekennzeichnet,**
**dass** der Anteil von 40 bis 80 % beträgt.

8. Verfahren nach zumindest einem der Ansprüche 1 bis 7,
**dadurch gekennzeichnet,**
**dass** als Katalysator der Formel **Ia** ein Katalysator eingesetzt wird, bei dem Y ausgewählt ist aus Cyclopentadienyl-, Indenyl-, und Fluorenyl-Gruppe, Z eine Kohlenwasserstoffgruppe, X ein Halogen und m zwei ist.

9. Verfahren nach einem der Ansprüche 1 bis 7,
**dadurch gekennzeichnet,**
**dass** als Katalysator der Formel **Ia** ein Katalysator gemäß der Formel **III** oder V 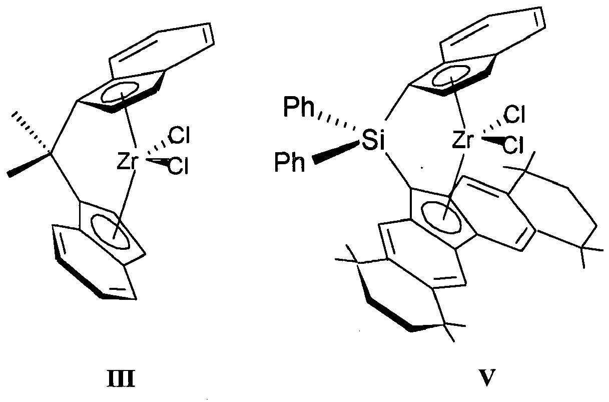 eingesetzt wird.

10. Copolymer, das als Comonomer 3-Methylbut-1-en enthält,
**dadurch gekennzeichnet,**
**dass** als weiteres Monomer Propen enthalten ist, der Anteil des eingebauten 3-Methylbut-1-en von 1 bis 10 mol-% beträgt und das Copolymer eine Schmelztemperatur von 90 bis 125 °C aufweist.

11. Copolymer nach Anspruch 10,
**dadurch gekennzeichnet,**
**dass** das Copolymer eine Molmasse M_{w} von 2.500 bis 2.200.000 g/mol aufweist.

12. Copolymer nach zumindest einem der Ansprüche 10 bis 11,
**dadurch gekennzeichnet,**
**dass** das Copolymer nach einem Verfahren gemäß einem der Ansprüche 1 bis 9 erhältlich ist.

## Claims

1. Process for preparing copolymers based on propene as a monomer and 3-methybut-1-ene as a comonomer, the proportion of the 3-methylbut-1-ene in the copolymer being 0.1 to 40 mol%,
**characterized in that**
the copolymerization is performed in the presence of a catalyst **Ia** of the formula 2(Cp*)(Y)M(X)ₘ 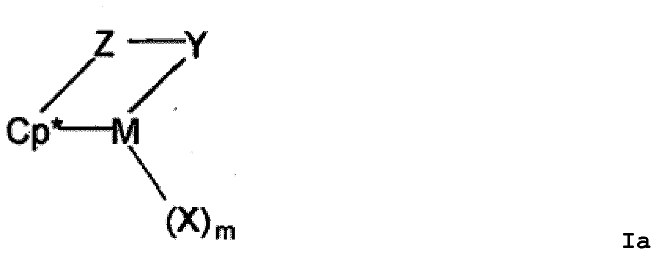 where Cp* = indenyl group,
Y = group of the cyclopentadienyl type, selected from substituted and unsubstituted cyclopentadienyl, indenyl, tetrahydroindenyl, octahydrofluorenyl and fluorenyl groups, or anionic ligand group containing nitrogen, phosphorus, oxygen or sulfur and up to 20 atoms which are not hydrogen, where Cp* and Y may be joined to one another covalently or via a Z group,
M is selected from Zr, Ti or Hf,
X = in each case independently a halogen atom, a pseudohalogen, a hydrogen atom, a silyl group, a phosphide, a sulfide or an organic radical and
m = a number which is sufficient to saturate the valences of M with the X, and
an aluminum- or boron-comprising compound as a cocatalyst, and Z is a CR²R³ group or an SiR²R³ group where R² and R³ are the same or different and are each hydrogen or an aromatic or aliphatic radical.

2. Process according to Claim 1,
**characterized in that**
the aluminum-comprising compound used is methylaluminoxane (MAO).

3. Process according to at least one of Claims 1 to 2,
**characterized in that**
the copolymerization is performed at a molar ratio of metal of the catalyst of the formula **Ia** to aluminum or boron of the cocatalyst of 1:0.1 to 1:100 000.

4. Process according to at least one of Claims 1 to 3,
**characterized in that**
the copolymerization is performed in a solvent selected from butane, hexane, heptane, toluene, xylene and ethylbenzene.

5. Process according to at least one of Claims 1 to 4,
**characterized in that**
the copolymerization is performed at a pressure of 0.1 to 1 MPa.

6. Process according to at least one of Claims 1 to 5,
**characterized in that**
the molar proportion of 3-methylbut-1-ene monomer in the reaction mixture in the sum of monomers of 3-methylbut-1-ene and propene is at least 20%.

7. Process according to Claim 6,
**characterized in that**
the proportion is 40 to 80%.

8. Process according to at least one of Claims 1 to 7,
**characterized in that**
the catalyst of the formula **Ia** used is a catalyst in which Y is selected from cyclopentadienyl group, indenyl group and fluorenyl group, Z is a hydrocarbon group, X is a halogen and m is two.

9. Process according to any one of Claims 1 to 7,
**characterized in that**
the catalyst of the formula **Ia** used is a catalyst of the formula III or V

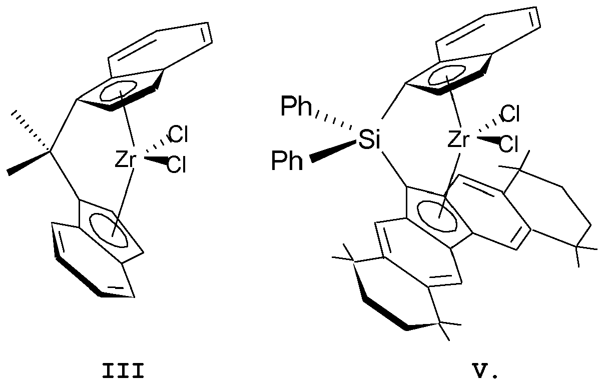

10. Copolymer which contains 3-methylbut-1-ene as a comonomer,
**characterized in that**
the further monomer present is propene, the proportion of the incorporated 3-methylbut-1-ene is 1 to 10 mol% and the copolymer has a melting point of 90 to 125°C.

11. Copolymer according to Claim 10,
**characterized in that**
the copolymer has a molar mass M_{w} of 2500 to 2 200 000 g/mol.

12. Copolymer according to at least one of Claims 10 to 11,
**characterized in that**
the copolymer is obtainable by a process according to any one of Claims 1 to 9.

## Revendications

1. Procédé de fabrication de copolymères à base de propène en tant que monomère et de 3-méthylbut-1-ène en tant que comonomère, la proportion de 3-méthylbut-1-ène dans le copolymère étant de 0,1 à 40 % en moles, **caractérisé en ce que**
la copolymérisation est réalisée en présence d'un catalyseur la de formule Z(Cp*)(Y)M(X)ₘ 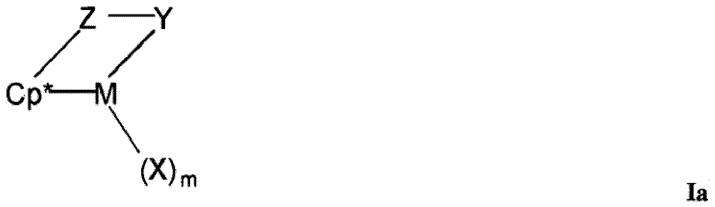 avec Cp* = groupe indényle,
Y = groupe de type cyclopentadiényle, choisi parmi les groupes cyclopentadiényle, indényle, tétrahydroindényle, octahydrofluorényle et fluorényle substitués ou non substitués, ou groupe ligand anionique contenant de l'azote, du phosphore, de l'oxygène ou du soufre et jusqu'à 20 atomes qui ne sont pas l'hydrogène, Cp* et Y pouvant être reliés l'un à l'autre par une liaison covalente ou par un groupe Z,
M étant choisi parmi Zr, Ti ou Hf,
X = à chaque fois indépendamment un atome d'halogène, un pseudohalogène, un atome d'hydrogène, un groupe silyle, un phosphure, un sulfure ou un radical organique, et
m = un nombre qui suffit pour saturer avec les X les valences de M,
et un composé comprenant de l'aluminium ou du bore en tant que co-catalyseur,
Z étant un groupe CR²R³ ou SiR²R³ avec R² et R³ identiques ou différents et représentant l'hydrogène ou un radical aromatique ou aliphatique.

2. Procédé selon la revendication 1, **caractérisé en ce que** le méthylalumoxane (MAO) est utilisé en tant que composé comprenant de l'aluminium.

3. Procédé selon au moins l'une quelconque des revendications 1 à 2, **caractérisé en ce que** la copolymérisation est réalisée à un rapport molaire entre le métal du catalyseur de formule Ia et l'aluminium ou le bore du co-catalyseur de 1 sur 0, 1 à 1 sur 100 000.

4. Procédé selon au moins l'une quelconque des revendications 1 à 3, **caractérisé en ce que** la copolymérisation est réalisée dans un solvant choisi parmi le butane, l'hexane, l'heptane, le toluène, le xylène et l'éthylbenzène.

5. Procédé selon au moins l'une quelconque des revendications 1 à 4, **caractérisé en ce que** la copolymérisation est réalisée à une pression de 0,1 à 1 MPa.

6. Procédé selon au moins l'une quelconque des revendications 1 à 5, **caractérisé en ce que** la proportion molaire du monomère 3-méthylbut-1-ène dans le mélange réactionnel par rapport à la somme des monomères 3-méthylbut-1-ène et propène est d'au moins 20 %.

7. Procédé selon la revendication 6, **caractérisé en ce que** la proportion est de 40 à 80 %.

8. Procédé selon au moins l'une quelconque des revendications 1 à 7, **caractérisé en ce qu'**un catalyseur dans lequel Y est choisi parmi un groupe cyclopentadiényle, indényle et fluorényle, Z est un groupe hydrocarboné, X est un halogène et m vaut deux est utilisé en tant que catalyseur de formule Ia.

9. Procédé selon l'une quelconque des revendications 1 à 7, **caractérisé en ce qu'**un catalyseur de formule III ou V 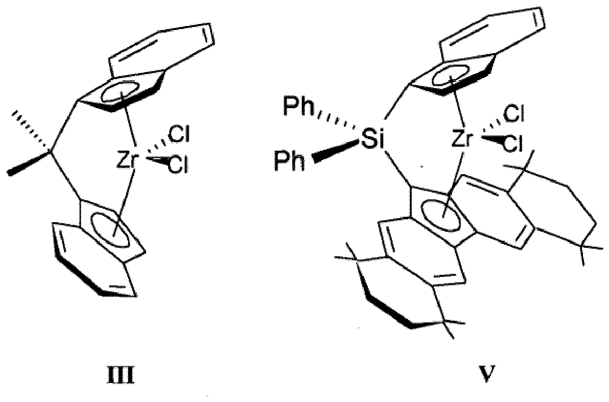 est utilisé en tant que catalyseur de formule Ia.

10. Copolymère, qui contient du 3-méthylbut-1-ène en tant que comonomère, **caractérisé en ce que** du propène est contenu en tant que monomère supplémentaire, la proportion de 3-méthylbut-1-ène incorporé est de 1 à 10 % en moles et le copolymère présente une température de fusion de 90 à 125 °C.

11. Copolymère selon la revendication 10, **caractérisé en ce que** le copolymère présente une masse molaire M_{w} de 2 500 à 2 200 000 g/mol.

12. Copolymère selon au moins l'une quelconque des revendications 10 à 11, **caractérisé en ce que** le copolymère peut être obtenu par un procédé selon l'une quelconque des revendications 1 à 9.
